(19) Europäisches Patentamt / European Patent Office / Office européen des brevets

(11) **EP 4 780 109 A1**

(12) **EUROPEAN PATENT APPLICATION**
published in accordance with Art. 153(4) EPC

(43) Date of publication:
**22.07.2026 Bulletin 2026/30**

(21) Application number: **24870787.9**

(22) Date of filing: **25.09.2024**

(51) International Patent Classification (IPC):
*H04W 72/23* (2023.01)

(52) Cooperative Patent Classification (CPC):
**H04W 72/044; H04W 72/23; H04W 74/0833**

(86) International application number:
**PCT/CN2024/121109**

(87) International publication number:
**WO 2025/067243 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311295572**

(71) Applicant: **HUAWEI TECHNOLOGIES CO., LTD.
Shenzhen 518129 (CN)**

(72) Inventors:
- **ZHAO, Feiran**
  **Shenzhen, Guangdong 518129 (CN)**
- **KONG, Chuili**
  **Shenzhen, Guangdong 518129 (CN)**
- **CHEN, Ying**
  **Shenzhen, Guangdong 518129 (CN)**

(74) Representative: **MERH-IP Matias Erny Reichl Hoffmann
Patentanwälte PartG mbB
Paul-Heyse-Straße 29
80336 München (DE)**

(54) **COMMUNICATION METHOD AND APPARATUS**

(57) This application provides a communication method and apparatus, and relates to the field of wireless communication. In the method, a network device may indicate, to a terminal, a position of each of a plurality of regions, a communication resource corresponding to each region, and a random access resource corresponding to each region. After obtaining the information, the terminal may send, to the network device, a random access resource corresponding to a region in which the terminal is located, so that the network device determines, based on the random access resource, a communication resource of the region in which the terminal is located. Subsequently, the terminal may communicate with the network device by using the communication resource of the region in which the terminal is located. According to the method, the network device may determine a communication resource like a beam for communicating with the terminal, to improve communication quality.

FIG. 7

**Description**

This application claims priority to Chinese Patent Application No. 202311295572.2, filed with the China National Intellectual Property Administration on September 28, 2023, and entitled "COMMUNICATION METHOD AND APPARATUS", which is incorporated herein by reference in its entirety.

**TECHNICAL FIELD**

This application relates to the field of wireless communication, and in particular, to a communication method and apparatus.

**BACKGROUND**

In a non-terrestrial network (non-terrestrial network, NTN) technology, a communication apparatus at a height from the ground, such as a satellite or a high-altitude platform (high-altitude platform, HPA), may be used to participate in network deployment. Therefore, the NTN technology can provide wider coverage, is less susceptible to damage from external forces and natural disasters, and can provide more communication resources than a terrestrial network (terrestrial network, TN), thereby increasing a network rate. In addition, the NTN technology can further enhance communication reliability, for example, provide a higher-quality communication service for a user in a fast-moving state (for example, a user traveling by airplane, train, high-speed train, or other vehicles). In conclusion, the NTN can compensate for disadvantages of the TN, and meet requirements of terminals for communication at any time and any place. Therefore, an inevitable trend in development of communication technologies is to enable terminals to support both the TN and the NTN.

In the NTN, a coverage area of a satellite is relatively wide, and the coverage area of the satellite needs to be scanned by using a plurality of satellite beams, to implement communication with a terminal. However, the satellite is relatively far away from the terminal. From a perspective of the satellite, features (for example, angles) of the plurality of satellite beams do not differ greatly, and it is difficult for the satellite to identify a satellite beam in which the terminal is located, affecting communication quality.

**SUMMARY**

This application provides a communication method and apparatus, so that a network device can determine a communication resource for communicating with a terminal, to improve communication quality.

To achieve the foregoing objective, the following technical solutions are used in this application.

According to a first aspect, a communication method is provided. The method may be performed by a network device. The network device herein may be the network device itself, or may be a processor, a module, a chip, a chip system, or the like that is in the network device and that implements the method.

The method includes: sending position information of a plurality of regions, information about a random access resource that indicates a random access resource corresponding to each region, and information about a communication resource corresponding to each region; receiving a first random access resource from a terminal; and communicating with the terminal by using a first communication resource. The first random access resource is a random access resource corresponding to a region in which the terminal is located; and the first communication resource is a communication resource corresponding to the region corresponding to the first random access resource.

Based on the method provided in the first aspect, the network device may indicate, to the terminal, a position of each of the plurality of regions, the communication resource corresponding to each region, and the random access resource corresponding to each region, so that the terminal may send, based on the foregoing information, the first random access resource to the network device based on the region in which the terminal is located, and the network device determines, based on the first random access resource, the first communication resource used to communicate with the terminal. In this way, the network device may determine a communication resource (for example, a beam) used to communicate with the terminal, thereby improving communication quality.

In a possible implementation, the method further includes: sending m first synchronization signal blocks at a first moment respectively by using second communication resources of m regions in the plurality of regions, where the m first synchronization signal blocks include a same cell identifier, m is an integer greater than 1, and m is less than a total quantity of the plurality of regions.

Based on the foregoing possible implementation, during cell planning, a plurality of regions covered by the network device may be combined to reduce a quantity of cells included in the network device, and first synchronization signal blocks are sent to different regions (for example, each of the m regions) in a same cell by using different communication resources, so that beam positions corresponding to the communication resources are scanned by using SSBs. Based on this logic, subsequently, the network device may scan other beam positions by using a similar method, to complete scanning of an entire coverage area of the network device within a time period by using synchronization signal blocks. In addition, in this possible implementation, the synchronization signal block does not need to be extended, and a terminal in a connected state can be prevented from frequently performing cell switches in an earth moving beam scenario, thereby reducing signaling overheads or switch overheads. Moreover, physical cell identifier (physical cell identifier, PCI) collisions can also be reduced.

In a possible implementation, the first synchronization signal block further includes an identifier of the first synchronization signal block, a primary synchronization signal, a secondary synchronization signal, and a physical broadcast channel, and the m first synchronization signal blocks include same content.

Based on the foregoing possible implementation, the first synchronization signal block may include the foregoing information. The identifier of the first synchronization signal block may enable the terminal that receives the first synchronization signal block to determine the identifier of the first synchronization signal block. The primary synchronization signal and the secondary synchronization signal may enable the terminal that receives the first synchronization signal block to perform downlink synchronization. The physical broadcast channel may enable the terminal that receives the first synchronization signal block to determine timing-related information and obtain a system information block type 1. In addition, because the m regions belong to the same cell, the m first synchronization signal blocks include the same content. In other words, the m first synchronization signal blocks include the same identifier of the first synchronization signal block, the same primary synchronization signal, the same secondary synchronization signal, and the same physical broadcast channel.

In a possible implementation, the method further includes: sending m second synchronization signal blocks at a second moment respectively by using third communication resources of the m regions, where the m second synchronization signal blocks include a same cell identifier, and the second synchronization signal block and the first synchronization signal block include a same cell identifier.

Based on the foregoing possible implementation, the network device may scan, at the second moment, beam positions other than those scanned at the first moment in the m regions, to implement scanning in the m regions by using synchronization signal blocks.

In a possible implementation, the information about the random access resource indicates a preamble corresponding to each region; or the information about the random access resource indicates a random access channel occasion corresponding to each region; or the information about the random access resource indicates a preamble format corresponding to each region.

Based on the foregoing possible implementation, the network device may allocate the corresponding random access resource to each region in a plurality of manners, to adapt to different communication scenarios. For example, if the information about the random access resource indicates the preamble corresponding to each region, the network device may allocate the preamble in the random access channel occasion to each of the plurality of regions, so that the terminal selects a preamble based on a location of the terminal to access the network device, and the network device determines, based on the preamble, a communication resource for communicating with the terminal. If the information about the random access resource indicates the random access channel occasion corresponding to each region, the network device may allocate different random access channel occasions to each of the plurality of regions, so that the terminal determines a corresponding random access channel occasion based on the location of the terminal and selects a preamble from the random access channel occasion to access the network device, and the network device determines, based on the preamble, a communication resource for communicating with the terminal. If the information about the random access resource indicates the preamble format corresponding to each region, the network device may allocate different preamble formats to each of the plurality of regions, so that the terminal determines a corresponding preamble format based on the location of the terminal and selects a preamble from preambles that meet the preamble format to access the network device, and the network device determines, based on the preamble, a communication resource for communicating with the terminal.

In a possible implementation, the method further includes: sending inter-region switch information, where the inter-region switch information indicates regions to which the terminal switches in sequence in a first cell and condition information for triggering each inter-region switch.

Based on the foregoing possible implementation, the network device may configure the inter-region switch information for the terminal, so that the terminal quickly switches between regions based on the inter-region switch information. This can reduce measurement overheads of the network device and the terminal, and can further reduce power consumption of the terminal.

In a possible implementation, the condition information for triggering the inter-region switch indicates a time of triggering the inter-region switch, or a boundary of a corresponding region.

Based on the foregoing possible implementation, the network device may configure, for the terminal, the time of triggering the inter-region switch, so that the terminal determines, based on the time of triggering the inter-region switch, whether to perform the inter-region switch; or the network device may indicate a boundary of each region to the terminal, so that the terminal determines the region in which the terminal is located, and then determines whether to perform the inter-region switch.

In a possible implementation, the first communication resource includes at least one of a beam, an antenna port, a transmission reception point, or a transceiver.

Based on the foregoing possible implementation, the network device may determine a beam for communicating with the terminal, and/or an antenna port for communicating with the terminal, and/or a transmission reception point for communicating with the terminal, and/or a transceiver for communicating with the terminal.

In a possible implementation, the information about the random access resource, the position information, and the information about communication resources are included in a system information block message.

Based on the foregoing possible implementation, the network device may send the information about the random access resource, the position information, and the information about the communication resources by using the system information block message. In other words, the network device may implement this solution by using an existing message, so that the solution is easier to implement.

According to a second aspect, a communication method is provided. The method may be performed by a terminal. The terminal herein may be the terminal itself, or may be a processor, a module, a chip, a chip system, or the like that is in the terminal and that implements the method.

The method includes: obtaining position information of a plurality of regions, information about a random access resource that indicates a random access resource corresponding to each region, and information about a communication resource corresponding to each region; sending a first random access resource to a network device; and communicating with the network device by using a first communication resource. The first random access resource is a random access resource corresponding to a region in which the terminal is located, the region in which the terminal is located is determined based on a location of the terminal and the position information, and the first communication resource is a communication resource corresponding to the region in which the terminal is located.

Based on the method provided in the second aspect, the terminal may obtain a position of each of the plurality of regions, the communication resource corresponding to each region, and the random access resource corresponding to each region, and send, based on the foregoing information, the first random access resource to the network device based on the region in which the terminal is located, so that the network device determines, based on the first random access resource, the first communication resource used to communicate with the terminal. In this way, the network device may determine a communication resource (for example, a beam) used to communicate with the terminal, thereby improving communication quality.

In a possible implementation, the information about the random access resource indicates a preamble corresponding to each region; or the information about the random access resource indicates a random access channel occasion corresponding to each region; or the information about the random access resource indicates a preamble format corresponding to each region.

Based on the foregoing possible implementation, the network device may allocate the corresponding random access resource to each region in a plurality of manners, to adapt to different communication scenarios. For example, if the information about the random access resource indicates the preamble corresponding to each region, the network device may allocate the preamble in the random access channel occasion to each of the plurality of regions, so that the terminal selects a preamble based on the location of the terminal to access the network device, and the network device determines, based on the preamble, a communication resource for communicating with the terminal. If the information about the random access resource indicates the random access channel occasion corresponding to each region, the network device may allocate different random access channel occasions to each of the plurality of regions, so that the terminal determines a corresponding random access channel occasion based on the location of the terminal and selects a preamble from the random access channel occasion to access the network device, and the network device determines, based on the preamble, a communication resource for communicating with the terminal. If the information about the random access resource indicates the preamble format corresponding to each region, the network device may allocate different preamble formats to each of the plurality of regions, so that the terminal determines a corresponding preamble format based on the location of the terminal and selects a preamble from preambles that meet the preamble format to access the network device, and the network device determines, based on the preamble, a communication resource for communicating with the terminal.

In a possible implementation, the method further includes: receiving inter-region switch information, where the inter-region switch information indicates regions to which the terminal switches in sequence in a first cell and condition information for triggering each inter-region switch.

Based on the foregoing possible implementation, the terminal may quickly switch between regions based on the inter-region switch information. This can reduce measurement overheads of the network device and the terminal, and further reduce power consumption of the terminal.

In a possible implementation, the condition information for triggering the inter-region switch indicates a time of triggering the inter-region switch, or a boundary of a corresponding region.

Based on the foregoing possible implementation, the terminal may determine, based on the time of triggering the inter-region switch, whether to perform the inter-region switch; or the terminal may determine the region in which the terminal is located, and then determine whether to perform the inter-region switch.

In a possible implementation, obtaining the information about the random access resource, the position information of the plurality of regions, and the information about the communication resource corresponding to each region includes: receiving a system information block message from the network device, where the system information block message includes the information about the random access resource, the position information, and the information about communication resources.

Based on the foregoing possible implementation, the terminal may receive the information about the random access resource, the position information, and the information about the communication resources by using the system information block message. In other words, the terminal may implement this solution by using an existing message, so that the solution is easier to implement.

In a possible implementation, the first communication resource includes at least one of a beam, an antenna port, a transmission reception point, or a transceiver.

Based on the foregoing possible implementation, the terminal may determine a beam for communicating with the network device, and/or an antenna port for communicating with the terminal, and/or a transmission reception point for communicating with the terminal, and/or a transceiver for communicating with the terminal.

According to a third aspect, a communication method is provided. The method may be performed by a network device. The network device herein may be the network device itself, or may be a processor, a module, a chip, a chip system, or the like that is in the network device and that implements the method.

The method includes: sending n first synchronization signal blocks at a first moment respectively by using first communication resources of n regions in p regions. The n first synchronization signal blocks include a same cell identifier, n is an integer greater than 1, and n is less than p.

Based on the method provided in the third aspect, during cell planning, p regions covered by the network device may be combined to reduce a quantity of cells included in the network device, and first synchronization signal blocks are sent to different regions (for example, each of the n regions) in a same cell by using different communication resources, so that beam positions corresponding to the communication resources are scanned by using synchronization signal blocks. Based on this logic, subsequently, the network device may scan other beam positions by using a similar method, to complete scanning of an entire coverage area of the network device within a time period by using synchronization signal blocks. In addition, in the third aspect, the synchronization signal block does not need to be extended, and a terminal in a connected state can be prevented from frequently performing cell switches in an earth moving beam scenario, thereby reducing signaling overheads or switch overheads. Moreover, PCI collisions can also be reduced.

In a possible implementation, the first synchronization signal block further includes an identifier of the first synchronization signal block, a primary synchronization signal, a secondary synchronization signal, and a physical broadcast channel, and the n first synchronization signal blocks include same content.

Based on the foregoing possible implementation, the first synchronization signal block may include the foregoing information. The identifier of the first synchronization signal block may enable the terminal that receives the first synchronization signal block to determine the identifier of the first synchronization signal block. The primary synchronization signal and the secondary synchronization signal may enable the terminal that receives the first synchronization signal block to perform downlink synchronization. The physical broadcast channel may enable the terminal that receives the first synchronization signal block to determine timing-related information and obtain a system information block type 1. In addition, because the n regions belong to the same cell, the n first synchronization signal blocks include the same content. In other words, the n first synchronization signal blocks include the same identifier of the first synchronization signal block, the same primary synchronization signal, the same secondary synchronization signal, and the same physical broadcast channel.

In a possible implementation, the method further includes: sending n second synchronization signal blocks at a second moment respectively by using second communication resources of the n regions, where the n second synchronization signal blocks include a same cell identifier, and the second synchronization signal block and the first synchronization signal block include a same cell identifier.

Based on the foregoing possible implementation, the network device may scan, at the second moment, beam positions other than those scanned at the first moment in the n regions, to implement scanning in the n regions by using synchronization signal blocks.

In a possible implementation, the method further includes: sending r third synchronization signal blocks at a third moment respectively by using third communication resources of r regions in the p regions, where the r third synchronization signal blocks include a same cell identifier, the cell identifier included in the third synchronization signal block is different from the cell identifier included in the first synchronization signal block, the r regions are regions other than the n regions in the p regions, r is an integer greater than 1, and r is less than p.

Based on the foregoing possible implementation, the network device may scan, at the third moment, the r regions in the p regions other than the n regions, to implement scanning of the coverage area of the network device by using synchronization signal blocks.

In a possible implementation, the first communication resource includes at least one of a beam, an antenna port, a transmission reception point, or a transceiver.

Based on the foregoing possible implementation, beams, and/or antenna ports, and/or transmission reception points, and/or transceiver machines corresponding to the regions may be different.

According to a fourth aspect, a communication apparatus is provided, and configured to implement the foregoing methods. The communication apparatus may be the network device in the first aspect, or the communication apparatus may be the terminal in the second aspect, or the communication apparatus may be the network device in the third aspect. The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

With reference to the fourth aspect, in a possible implementation, the communication apparatus may include an interface module. The interface module may also be referred to as an interface unit, and is configured to implement a sending function and/or a receiving function in any one of the foregoing aspects or the possible implementations of the foregoing aspects. The interface module may include an interface circuit, a transceiver machine, a transceiver, or a communication interface.

With reference to the fourth aspect, in a possible implementation, the interface module includes a sending module and a receiving module that are respectively configured to implement a sending function and a receiving function in any one of the foregoing aspects or the possible implementations of the foregoing aspects.

With reference to the fourth aspect, in a possible implementation, the communication apparatus may further include a processing module. The processing module may be configured to implement a processing function in any one of the foregoing aspects or the possible implementations of the foregoing aspects. The processing module may be, for example, a processor.

According to a fifth aspect, a communication apparatus is provided, including a processor. The processor is configured to: after being coupled to a memory and reading instructions in the memory, perform the method in any one of the foregoing aspects based on the instructions. The communication apparatus may be the network device in the first aspect, or the communication apparatus may be the terminal in the second aspect, or the communication apparatus may be the network device in the third aspect.

With reference to the fifth aspect, in a possible implementation, the communication apparatus further includes a memory. The memory is configured to store program instructions and data. Optionally, the memory and the processor are integrated together, or the memory is independent of the processor.

With reference to the fifth aspect, in a possible implementation, the communication apparatus is a chip or a chip system. Optionally, when the communication apparatus is a chip system, the communication apparatus may include a chip; or may include a chip and another discrete component.

According to a sixth aspect, a communication apparatus is provided, including a processor and an interface circuit. The interface circuit is configured to receive a computer program or instructions, and transmit the computer program or the instructions to the processor. The processor is configured to execute the computer program or the instructions, to enable the communication apparatus to perform the method in any one of the foregoing aspects. The communication apparatus may be the network device in the first aspect, or the communication apparatus may be the terminal in the second aspect, or the communication apparatus may be the network device in the third aspect.

With reference to the sixth aspect, in a possible implementation, the communication apparatus is a chip or a chip system. Optionally, when the communication apparatus is a chip system, the communication apparatus may include a chip; or may include a chip and another discrete component.

According to a seventh aspect, a computer-readable storage medium is provided. The computer-readable storage medium stores instructions. When the instructions are run on a computer, the computer is enabled to perform the method in any one of the foregoing aspects.

According to an eighth aspect, a computer program product including instructions is provided. When the computer program product runs on a computer, the computer is enabled to perform the method according to any one of the foregoing aspects.

According to a ninth aspect, a communication system is provided. The communication system includes a network device configured to perform the method in the first aspect and a terminal configured to perform the method in the second aspect.

In a possible implementation, the communication system further includes a network device configured to perform the method in the third aspect.

For technical effects achieved by any one of the possible implementations of the fourth aspect to the ninth aspect, refer to technical effects achieved by any one of the first aspect and the second aspect or different possible implementations of the first aspect or the second aspect. Details are not described herein again.

## BRIEF DESCRIPTION OF DRAWINGS

FIG. 1A is a diagram of an earth fixed beam;
FIG. 1B is a diagram of an earth moving beam;
FIG. 1C is a satellite antenna pattern of a low earth orbit (low earth orbit, LEO) satellite;
FIG. 1D is a diagram of a synchronization signal block (synchronization signal block, SSB) scanning mode according to this application;
FIG. 1E is a diagram 1 of beam scanning according to this application;
FIG. 1F is a diagram 2 of beam scanning according to this application;
FIG. 1G is a diagram of a PCI collision according to this application;
FIG. 1H is a diagram of a movement trajectory of a satellite according to this application;
FIG. 1I is a diagram of a relationship between a PCI collision and a quantity of cells in a coverage area of a single satellite in NTN constellation networking according to this application;
FIG. 1J is a schematic flowchart in which a terminal switches between transmission reception points (transmission receiving points or transmission reception points, TRPs);
FIG. 1K is a diagram of communication between a terminal and a TRP;
FIG. 2A is a diagram of an architecture of a communication system according to this application;
FIG. 2B is a diagram 1 of a communication scenario according to this application;
FIG. 2C is a diagram 2 of a communication scenario according to this application;
FIG. 2D is a diagram 3 of a communication scenario according to this application;
FIG. 3 is a diagram of a hardware structure of a communication apparatus according to this application;
FIG. 4 is a schematic flowchart 1 of a communication method according to this application;
FIG. 5 is a schematic flowchart 2 of a communication method according to this application;
FIG. 6 is a schematic flowchart 3 of a communication method according to this application;
FIG. 7 is a schematic flowchart 4 of a communication method according to this application;
FIG. 8 is a schematic flowchart 5 of a communication method according to this application; and
FIG. 9 is a diagram of a structure of a communication apparatus according to this application.

## DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

1. Network device

In this application, a network device is a network device in an NTN, and is configured to provide a wireless access service for a terminal. Specifically, each network device corresponds to one service coverage area. A terminal that enters the region may communicate with the network device through an air interface (air interface), to receive a wireless access service provided by the network device. The terminal and the network device may communicate with each other through an air interface link. Air interface links may be classified into an uplink (uplink, UL) and a downlink (downlink, DL) based on directions of data transmitted through the air interface links. Uplink data sent by the terminal to the network device may be transmitted on the UL, and downlink data transmitted by the network device to the terminal may be transmitted on the DL.

For example, the network device may implement all or some functions of a radio access network (radio access network, RAN) node. For example, the network device includes but is not limited to an evolved NodeB (NodeB, eNB, or e-NodeB, evolved NodeB) in long term evolution (long term evolution, LTE), a next generation evolved NodeB (next generation eNB, ng-eNB) in LTE, a base station (gNodeB or gNB) in new radio (new radio, NR), a transmitting point (transmitting point, TP) or a transmission reception point (transmission receiving point/transmission reception point, TRP), a future evolved 3GPP base station, a next generation NodeB (next generation NodeB, gNB), a next generation base station in a 6th generation (6th generation, 6G) mobile communication system, a base station in a future mobile communication system, a satellite, an access node in a Wi-Fi system, a wireless relay node, a wireless backhaul node, an integrated access and backhaul (integrated access and backhaul, IAB) node, a high-altitude platform, or the like. The base station may be a macro base station, a micro base station, a pico base station, a small cell, a relay station, a balloon-based base station, or the like. A plurality of base stations may support networks using a same technology mentioned above, or may support networks using different technologies mentioned above. The base station may include one or more co-located or non-co-located TRPs. The network device may alternatively be a radio controller in a cloud radio access network (cloud radio access network, CRAN) scenario. The network device may alternatively be a central unit (central unit, CU), a distributed unit (distributed unit, DU), a CU-control plane (control plane, CP), a CU-user plane (user plane, UP), a radio unit (radio unit, RU), a wired access gateway, a core network element, or the like.

In this application, the CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that, the CU may be classified as a network device in an access network, or the CU may be classified as a network device in a core network. This is not limited herein.

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Optionally, the network device in this application may be deployed on a non-terrestrial platform, for example, deployed on a low-altitude platform (for example, an uncrewed aerial vehicle), a high-altitude platform (for example, an airplane), or a satellite. Therefore, the network device in this application may also be referred to as a non-terrestrial network device.

A form of the network device is not limited in this application. An apparatus for implementing a function of the network device may be the network device, or may be an apparatus, for example, a chip system, that can enable the network device to implement the function. The apparatus may be mounted in the network device or used in combination with the network device.

2. Terminal

In this application, a terminal is a device having a wireless transceiver function. The terminal may be deployed on land, including an indoor or outdoor device, a handheld device, or a vehicle-mounted device, or may be deployed on water (for example, on a ship), or may be deployed in the air (for example, on an airplane, a balloon, or a satellite). The terminal may also be referred to as a terminal device. The terminal device may be user equipment (user equipment, UE), a mobile station (mobile station, MS), a mobile terminal (mobile terminal, MT), or the like, or a device configured to provide voice or data connectivity for a user. The UE includes a handheld device with a wireless communication function, an in-vehicle device (for example, a car, a bicycle, an electric vehicle, an airplane, a ship, a train, or a high-speed train), a wearable device (for example, a smartwatch, a smart band, or a pedometer), or a computing device. For example, the UE may be a mobile phone (mobile phone), a tablet computer, a notebook computer, a palmtop computer, a mobile Internet device (mobile Internet device, MID), a satellite terminal, or a computer with a wireless transceiver function. The UE may alternatively be a virtual reality (virtual reality, VR) terminal device, an augmented reality (augmented reality, AR) terminal device, a wireless modem (modem), a smart point of sale (point of sale, POS) machine, customer premises equipment (customer premises equipment, CPE), a smart robot, a robot arm, a workshop device, a smart home device (such as a refrigerator, a television, an air conditioner, or an electric meter), a wireless terminal in industrial control, a wireless terminal in self driving, a wireless terminal in telemedicine, a wireless terminal in a smart grid (smart grid), a wireless terminal in transportation security, a wireless terminal in a smart city (smart city), a wireless terminal in a smart home (smart home), an in-vehicle terminal, a roadside unit (road side unit, RSU) with a terminal function, a flight device (for example, a smart robot, a hot air balloon, an uncrewed aerial vehicle, or an airplane), or the like. The terminal may alternatively be another device having a terminal function. For example, the terminal may alternatively be a device that functions as a terminal in device to device (device to device, D2D) communication.

By way of an example but not a limitation, the terminal in this application may be a wearable device. The wearable device may also be referred to as a wearable intelligent device, and is a general term for wearable devices that are intelligently designed and developed for daily wear by using a wearable technology, for example, glasses, gloves, watches, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement all or some functions without depending on smartphones, for example, smartwatches or smart glasses, and include devices that are dedicated to only one type of application function and need to collaboratively work with other devices such as smartphones, for example, various smart bands or smart jewelry for monitoring physical signs.

In this application, the terminal may be a terminal in an Internet of Things (Internet of Things, IoT) system. An IoT is an important part in future development of an information technology. A main technical feature of the IoT is to connect things to a network by using a communication technology, to implement an intelligent network for human-machine interconnection and thing-thing interconnection. The terminal in this application may be a terminal in machine type communication (machine type communication, MTC). The terminal in this application may be a vehicle-mounted module, a vehicle-mounted assembly, a vehicle-mounted component, a vehicle-mounted chip, or a vehicle-mounted unit that is built in a vehicle as one or more components or units. The vehicle may use the vehicle-mounted module, the vehicle-mounted assembly, the vehicle-mounted component, the vehicle-mounted chip, or the vehicle-mounted unit that is built in the vehicle, to implement the method in this application. The terminal in this application may be a vehicle, for example, a car. Therefore, this application may be applied to the Internet of Vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

It may be understood that, in some scenarios, roles of a RAN node and a terminal are relative. For example, a helicopter or an uncrewed aerial vehicle that is usually configured as a terminal may also be configured as a mobile base station, and a device that accesses a RAN by using the helicopter or the uncrewed aerial vehicle is configured as a terminal.

3. Beam

In this application, a beam is a communication resource. A technology for forming the beam may be a beamforming technology or another technology. The beamforming technology may be specifically a digital beamforming technology, an analog beamforming technology, a hybrid digital/analog beamforming technology, or the like. Different beams may be considered as different resources. Same information or different information may be sent by using different beams.

In the NTN, beams may be classified into an earth fixed beam and an earth moving beam based on different operating modes. The earth fixed beam means that the network device adjusts a beam angle by using a beamforming technology, so that the beam can be fixed at a fixed position on the ground for a period of time. The earth moving beam means that a transmit angle of the beam does not change with time. Therefore, a projection topology of the beam on the ground moves with a movement direction of the network device.

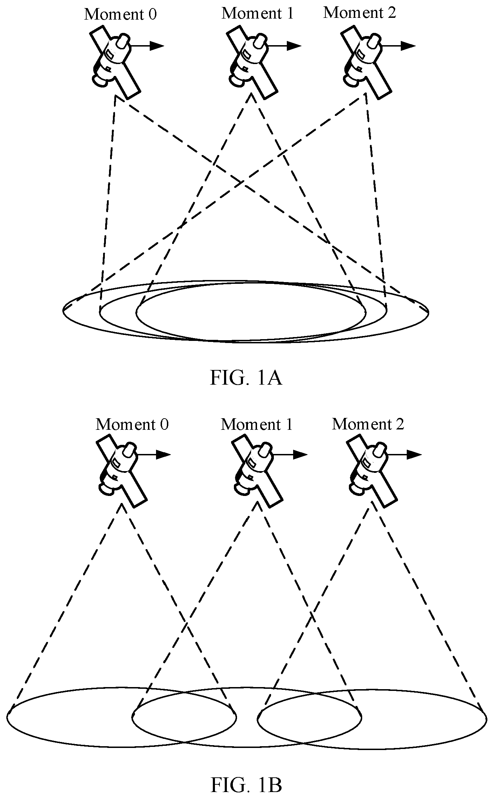

For example, the network device is a satellite. An earth fixed beam may be shown in FIG. 1A, and an earth moving beam may be shown in FIG. 1B. In FIG. 1A, a satellite may dynamically adjust a satellite beam direction, so that the satellite beam approximately covers a same region on the ground in a time period from a time 0 to a time 2. In FIG. 1B, a satellite beam has a same transmit angle at a time 0, a time 1, and a time 2, and therefore, a coverage area of the satellite beam moves with the satellite.

4. SSB

In this application, an SSB may provide downlink synchronization of a cell and basic configuration information of the cell for the terminal. For example, the SSB includes a PCI. The SSB further includes an identifier (SSB index) of the SSB, a primary synchronization signal (primary synchronization signals, PSS), a secondary synchronization signal (secondary synchronization signals, SSS), and a physical broadcast channel (physical broadcast channel, PBCH). The PSS and the SSS are used by the terminal to perform downlink synchronization, the PBCH may carry a master information block (master information block, MIB), and the MIB may indicate whether a system information block type 1 (system information block type 1, SIB1) exists.

5. SSB burst (burst)

In this application, the SSB burst includes SSBs required for completing one beam scanning. Each SSB in the SSB burst is sent in a different direction at different times, to achieve cell coverage. All SSBs in an SSB burst need to be sent within a specific time period (for example, a half frame, that is, 5 ms). In other words, the network device needs to complete scanning of a cell within the time period. A periodicity of the SSB burst may be configured as required, for example, may be configured by using a SIB1. The periodicity may be specifically 5 ms, 10 ms, 20 ms, 40 ms, 80 ms, 160 ms, or the like.

6. PCI

In this application, a PCI is used to identify a cell of the network device. The PCI is related to m-sequences (three sequences whose lengths are 127) used in the PSS of the SSB and Gold sequences (336 sequences whose lengths are 127, corresponding to each primary synchronization sequence) used by the SSS of the SSB.

For example, the PCI satisfies the following formula: $N_{ID}^{\text{cell}} = 3N_{ID}^{(1)} + N_{ID}^{(2)}$. $N_{ID}^{\text{cell}}$ is the PCI. A value range of $N_{ID}^{(2)}$ is 0, 1, or 2, which may be determined based on the m-sequences. A value range of $N_{ID}^{(1)}$ is 0 to 335, which may be determined based on the Gold sequences. Therefore, a value range of the PCI is 0 to 1007, and supports a maximum of 1008 unique cell PCIs.

Optionally, in an earth fixed beam scenario, the PCI may be managed and allocated by a ground station, and the PCI is not bound to a satellite. In an earth moving beam scenario, the PCI is managed and allocated by a satellite.

In the background, a communication apparatus at a height above the ground, which may be used to participate in network deployment in the NTN, is described. Therefore, the NTN has some advantages that the TN does not have. For example, the NTN can provide wider coverage, can cover a region (a region such as an ocean, a forest, or a desert) that is not covered by the TN, can provide more communication resources to increase a network rate, can enhance communication reliability, and is less susceptible to damage from external forces and natural disasters. Therefore, an inevitable trend in development of communication technologies is to enable terminals to support both the TN and the NTN. However, the NTN also has disadvantages, which may cause a new problem when a terminal communicates with a network device in the NTN. The following uses an example in which the network device is a satellite for detailed description.

Satellites can be classified into four types based on their orbital altitudes: LEO satellites, with orbital altitudes of 500 km to 2000 km; medium earth orbit (medium earth orbit, MEO) satellites, with orbital altitudes of 2000 km to 20000 km; high earth orbit (high earth orbit, HEO) satellites, with elliptical orbital altitudes greater than 20000 km; and geostationary earth orbit (geostationary earth orbit, GEO) satellites, with orbital altitudes of 35800 km. An LEO satellite has a lowest orbital altitude, a relatively low round-trip propagation delay (round-trip delay, RTD), and a relatively low path loss. Therefore, the LEO satellite has greater research significance. Therefore, this application is described by using an LEO satellite as an example.

Currently, an LEO satellite with an orbital altitude of 600 km supports a terminal elevation of 10 degrees or 30 degrees. Therefore, a single LEO satellite covers a relatively large region (or coverage area). For example, if a minimum elevation of the terminal supported by the LEO satellite is 30 degrees, a radius of a coverage area of the LEO satellite may generally reach 853.6 km. However, a projection radius of a beam (which may be referred to as a satellite beam) transmitted by the LEO satellite on the ground is far less than 853.6 km. Therefore, a large quantity of beam positions are required to implement full coverage (or seamless coverage) of a coverage area of the LEO satellite by using satellite beams. The beam positions are some regions that are planned on the ground in advance and have same or different sizes and shapes. For example, a beam position in the center of the satellite coverage area is relatively small; and a beam position at an edge of the satellite coverage area is relatively large. When the satellite transmits a beam to a beam position, a center point of the beam is aligned with a center point of the beam position, and a beamforming algorithm is used to match a topology shape of the beam with a topology shape of the beam position.

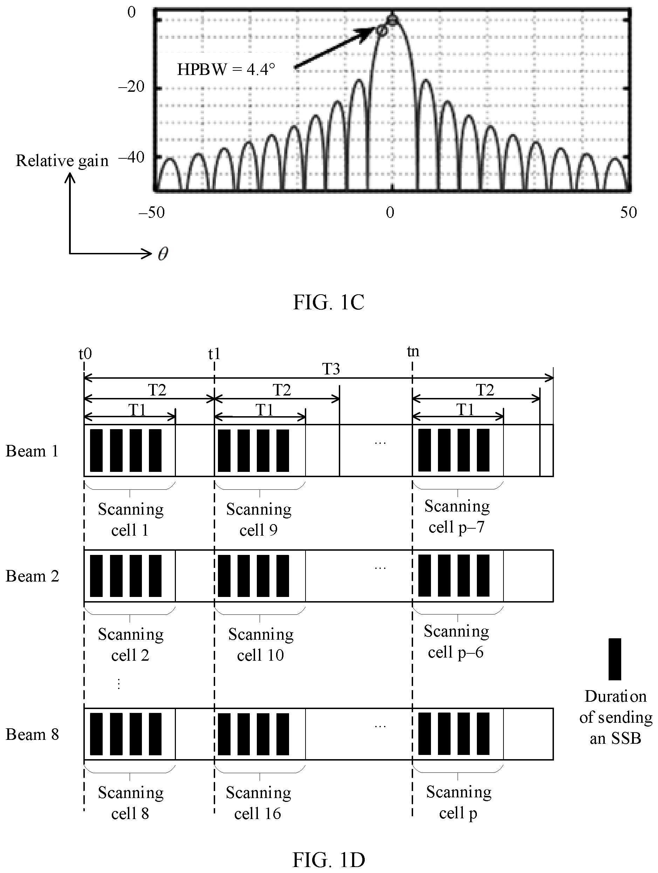

For example, the projection radius of the satellite beam on the ground (which may be considered as a radius of a beam position in this example) may be determined based on an antenna parameter of the LEO satellite. The antenna parameter may include an included angle $\theta$ between a line connecting the LEO satellite to the Earth's center and a main lobe of an antenna of the LEO satellite, a diameter of an antenna panel of the LEO satellite, a half power beam width (half power beam width, HPBW), and the like. When a diameter of the antenna panel of the LEO satellite is 2 m, radiation intensity (or a relative gain (relative gain)) of the antenna panel in each direction may be shown in FIG. 1C. It can be learned from FIG. 1C that, when $\theta$ is 0 degrees (degrees), the relative gain (relative gain) of the antenna panel is the largest, and when $\theta$ gradually deviates from 0 degrees, the relative gain of the antenna panel gradually decreases. If the projection radius of the satellite beam on the ground is calculated based on $\theta$ of 0 degrees, with the diameter of the antenna panel being 2 m, and the HPBW being 4.4 degrees, the obtained projection radius is 23.1 km. For example, if the radius of the region covered by the LEO satellite is 853.6 km, when the projection radius of the satellite beam on the ground is 23.1 km, 1372 beam positions are required for a reflector antenna to implement seamless coverage of the region covered by the LEO satellite. Details may be shown in Table 1.

Table 1

| Radius of the region covered by the LEO satellite when the terminal elevation supported by the LEO satellite is 30 degrees | Projection radius of the satellite beam on the ground | Quantity of beam positions for the reflector antenna |
|---|---|---|
| 853.6 km | 23.1 km | 1372 |

In the NTN, coverage areas of network devices are relatively wide. Therefore, these network devices all require a large quantity of beam positions to seamlessly cover the coverage areas of the network devices. After entering a coverage area of a network device, a terminal needs to perform initial access. For example, the network device may send, in a form of a burst, SSBs in all directions of the coverage area of the network device in a continuous time period (for example, within 5 ms). After entering the coverage area of the network device, the terminal may receive an SSB, obtain an access resource based on the SSB, and access the network device. Currently, a maximum quantity of SSBs supported by one cell is 64. For a cell whose frequency band is less than 3 GHz within a frequency range 1 (frequency range 1, FR1), a maximum quantity of SSBs supported by the cell is 4. It can be learned that a quantity of SSBs supported by one cell is far less than a quantity of beam positions required by the coverage area of the network device. In other words, the quantity of SSBs supported by one cell does not match the quantity of beam positions required by the coverage area of the network device, and the entire coverage area of the network device cannot be covered. To resolve this problem, this application provides the following four methods:

Method 1: The entire coverage area of the network device is partitioned as one cell, and the network device uses a wide beam as an SSB scanning beam. Specifically, the network device may reduce a quantity of antennas used by the antenna panel, or an antenna weight is designed, so that the antenna panel generates a beam pattern with a relatively wide main lobe width of 3 dB. For example, for a cell in a frequency band less than 3 GHz within the FR1, four SSB wide beams are used to cover the entire coverage area of the network device.

It may be understood that in the method 1, an SSB beam may be widened (that is, a coverage area of each SSB beam is increased), so that the SSB beam can cover the entire coverage area of the network device.

Method 2: The entire coverage area of the network device is partitioned as one cell, and an SSB sending mode (SSB pattern) is extended, so that scanning of the entire cell can be completed in an SSB scanning periodicity by using SSBs. Specifically, a quantity of SSBs supported by one cell may be increased, or duration of sending an SSB burst may be increased, or an SSB scanning periodicity may be increased.

It may be understood that, in the method 2, an SSB pattern may be extended, so that SSB beams can cover the entire coverage area of the network device.

Method 3: The entire coverage area of the network device is partitioned as p regions, and each region is a cell. The network device separately scans these cells by using a plurality of beams in a time division mode within a specific periodicity, where p is an integer greater than 1.

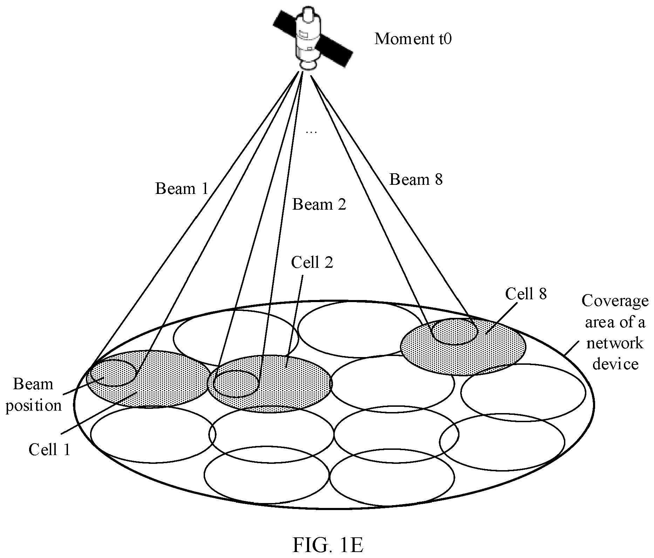

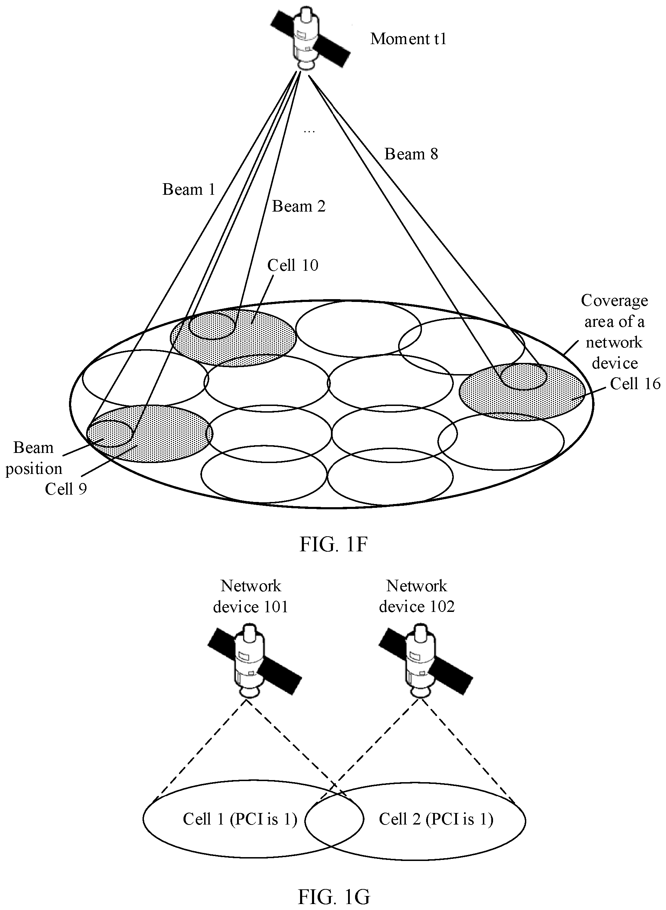

For example, an example in which the entire coverage area of the network device is partitioned as p cells is used for detailed description, where each cell includes four SSB directions that respectively correspond to four beam positions, the network device can simultaneously transmit eight beams (for example, a beam 1 to a beam 8), and send SSBs in an SSB scanning mode shown in FIG. 1D. With reference to FIG. 1E, starting from a moment t0, the network device simultaneously uses a beam 1 to a beam 8 to send an SSB burst to eight cells (for example, a cell 1 to a cell 8) in the coverage area of the network device. The SSB burst includes four SSBs (for example, an SSB 0 to an SSB 3), which respectively correspond to one SSB direction of one cell. Specifically, in a first time period T1 (for example, 5 ms) shown in FIG. 1D, the network device uses the beam 1 to send four SSBs at different times to separately scan a beam position 1 to a beam position 4 in the cell 1, simultaneously uses the beam 2 to send four SSBs at different times to separately scan a beam position 1 to a beam position 4 in the cell 2, simultaneously uses the beam 3 to send four SSBs at different moments to separately scan a beam position 1 to a beam position 4 in the cell 3, ..., and so on, and simultaneously uses the beam 8 to send four SSBs at different moments to separately scan a beam position 1 to a beam position 4 in the cell 8. In a subsequent time period, for example, after the first time period T1 ends and before a moment t1, the network device uses the beam 1 to the beam 8 to separately send, to the eight cells, system information (system information, SI) associated with the SSBs. After a first time period T2 (which may be referred to as a time division multiplexing (time division multiplexing, TDM) gap (gap)) ends, the network device adjusts directions of the eight beams in an analog, digital, or hybrid beamforming manner, so that the eight beams respectively point to eight cells other than the cell 1 to the cell 8, for example, a cell 9 to a cell 16, and sends an SSB burst to these cells. For example, as shown in FIG. 1F, starting from a moment t1, the network device simultaneously uses the beam 1 to the beam 8 to send an SSB burst to the cell 9 to the cell 16. By analogy, starting from a moment tn, the network device simultaneously uses the beam 1 to the beam 8 to send an SSB burst to a cell p-7 to a cell p. In the foregoing manner, the network device may complete scanning of all beam positions in the coverage area of the network device in the time period T3 (for example, 160 ms).

It may be understood that, in the method 3, a multi-beam and multi-cell time division SSB scanning mode may be used, so that different cells are scanned at different times by using SSB beams, to complete scanning of the entire coverage area of the network device within a time period by using SSBs.

Method 4: The entire coverage area of the network device is partitioned as p regions, and the p regions are partitioned as q cells. The network device separately scans these cells by using a plurality of beams in a time division mode within a specific periodicity, where q is an integer greater than 1, and q is less than p.

It may be understood that in the method 4, there is no need to extend an SSB (for example, widen an SSB beam or extend an SSB sending mode). Instead, a plurality of regions are combined during cell planning, to reduce a quantity of cells included in one network device. In addition, a multi-beam and multi-cell time division SSB scanning mode is used, so that different cells are scanned at different times by using SSB beams, to complete scanning of the entire coverage area of the network device within a time period by using SSBs.

In addition, reducing a quantity of cells included in one network device can further prevent a terminal in a connected state from frequently performing cell switches in an earth moving beam scenario, thereby reducing signaling overheads and reducing PCI collisions. The following provides detailed descriptions.

As described above, in an earth moving beam scenario, an angle of a transmit beam of the network device does not change with time, and a projection topology of the beam on the ground moves with a movement direction of the network device. In addition, in the NTN, a movement speed of the network device is usually relatively high. Therefore, even if the terminal does not move, a serving cell of the terminal keeps changing. As a result, the terminal performs frequent cell switches, and signaling overheads are relatively high. Therefore, reducing a quantity of cells included in the network device can prevent a terminal in a connected state from frequently performing cell switches in an earth moving beam scenario, thereby reducing signaling overheads.

In this application, a PCI collision means that different cells use a same PCI. For example, in FIG. 1G, a PCI of a cell 1 of a network device 101 is 1, and a PCI of a cell 2 of a network device 102 is also 1. Therefore, a PCI collision occurs between the cell 1 and the cell 2. As described above, a value range of the PCI is 0 to 1007, and supports a maximum of 1008 unique cell PCIs. Therefore, PCI collisions occur when the quantity of cells is greater than 1008. In the TN, a terrestrial base station is stationary relative to the ground, and it may be considered that a PCI of a cell is bound to a geographical location. PCIs may be properly planned and allocated to prevent neighboring cells (that is, first-order neighbors) or next-nearest neighboring cells (that is, second-order neighbors) from using a same PCI, thereby avoiding PCI collisions. However, in the NTN, a same location may be successively covered by different network devices. Therefore, a PCI at the location changes. In this PCI allocation mode, the first-order or second-order neighbors may have the same PCI as a constellation size increases.

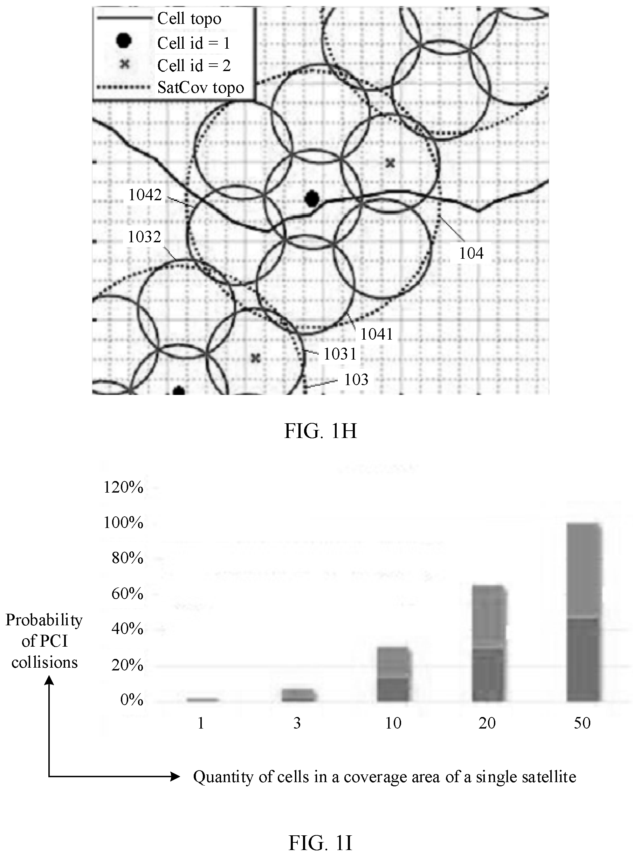

For example, FIG. 1H is a diagram of a movement trajectory of a satellite. At a time 1, a coverage area of a satellite 1 is a region 103, and the satellite 1 keeps moving. At a time 2, the coverage area of the satellite 1 changes to a region 104, and a satellite in the coverage area 103 changes to a satellite 2. When planning cells in the coverage areas of the satellite 1 and the satellite 2, the satellite 1 and the satellite 2 do not know the cell allocation in coverage areas of other satellites. Therefore, PCIs of a cell 1031, a cell 1032, a cell 1041, and a cell 1042 may collide.

In addition, if the network device is a satellite, because a single satellite is partitioned as a plurality of cells, a relative position relationship of cell topologies between different satellites changes over time due to satellite movement during entire constellation networking, and a PCI collision of the entire constellation is aggravated. FIG. 1I shows a relationship between a PCI collision and a quantity of cells in a coverage area of a single satellite in NTN constellation networking. It can be learned from FIG. 1I that, PCI collisions increase with increase of the quantity of cells in the coverage area of the single satellite.

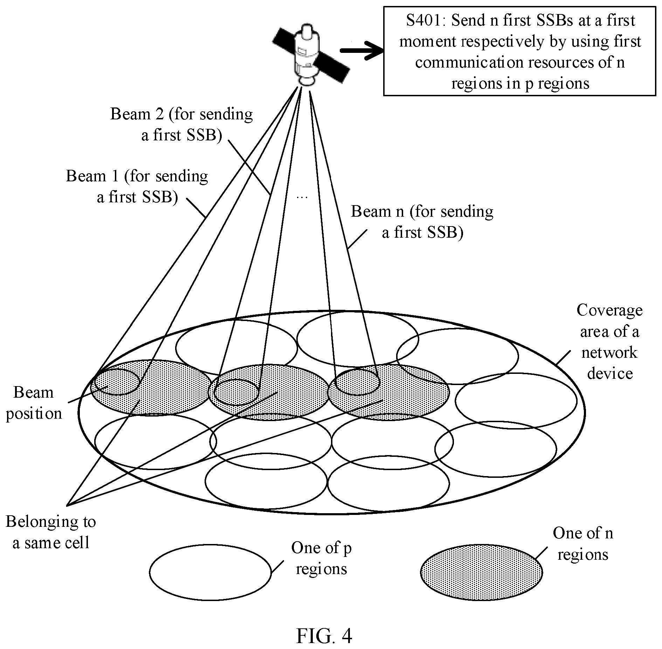

It may be understood that a PCI collision may cause cell switch failure. With continued reference to FIG. 1G, if the terminal camps on the cell 2 and needs to perform a cell switch, the terminal measures signal quality of the cell 1, and reports the PCI of the cell 1 and a measurement result corresponding to the PCI to the cell 2. However, because the PCI of the cell 1 is the same as the PCI of the cell 2, the cell 2 cannot determine, based on the PCI, which cell is measured by the terminal. As a result, the cell 2 may send a switch request to an incorrect network device, causing switch failure. Therefore, PCI collisions should be avoided in the NTN. However, the method 4 can reduce the quantity of cells included in the network device, and therefore can reduce a probability of PCI collisions. A specific process of the method 4 is described in detail in the following methods shown in FIG. 4 to FIG. 6, and details are not described herein.

It may be understood that, in addition to the foregoing collision caused by identical PCIs, there are problems such as impact on channel estimation, impact on demodulation performance, and increase of a call drop rate due to interference to a reference signal (such as a demodulation reference signal (demodulation reference signal, DMRS)) of an uplink data channel (such as a physical sidelink shared channel (physical sidelink shared channel, PSSCH)) of a cell. To avoid such interference, for neighboring cells in the NTN, it may be considered to avoid using PCIs that yield the same remainder when divided by 30 (mod 30). In addition, to avoid impact on DMRS demodulation of the PBCH and impact on downlink synchronization, for neighboring cells in the NTN, it may be considered to avoid using PCIs that yield the same remainder when divided by 3 (mod 3).

In addition to a problem that a quantity of SSBs supported by one cell does not match a quantity of beam positions required by a coverage area of a network device, the NTN has another unresolved problem.

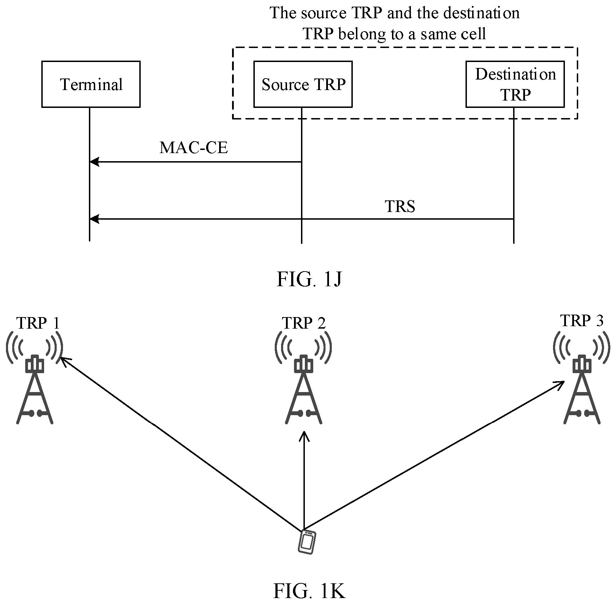

In the TN, in a continuous networking scenario, for example, on a high-speed train, a plurality of cells may be combined into a relatively large logical cell by using a hypercell (hypercell) architecture, so as to reduce a quantity of cell switches performed by a terminal. For example, as shown in FIG. 1J, a cell of a source TRP and a cell of a destination TRP may be combined into one logical cell, so that the source TRP and the destination TRP may be considered to belong to a same cell, and a radio resource control (radio resource control, RRC) reconfiguration (reconfiguration) message is not required to configure cell switch related information. In FIG. 1J, the source TRP may send a medium access control control element (medium access control control element, MAC-CE) to the terminal, to trigger the terminal to perform measurement reporting for a tracking reference signal (tracking reference signal, TRS). The destination TRP may send a TRS to the terminal, so that the terminal measures channel quality based on the TRS, and switches between TRPs. Because the source TRP and the destination TRP belong to the same cell, the switch between TRPs does not involve L3 signaling, and there is no need to perform a cell switch related procedure.

In the hypercell architecture, a TRP is located at a relatively low height above the ground, and a terminal sends an uplink signal. A difference between signal angles of arrival at which uplink signals arrive at different TRPs is relatively large. The TRP may determine, by using a receiver to determine signal strength, a coverage area of a TRP in which the terminal is located. For example, in FIG. 1K, angles of arrival at which uplink signals sent by the terminal arrive at the TRP 1, the TRP 2, and the TRP 3 differ greatly. The TRP 2 may easily determine that the terminal is in a coverage area of the TRP 2, and the TRP 1 and the TRP 3 may easily determine that the terminal is not in coverage areas of the TRP 1 and the TRP 3.

However, in the NTN, the network device is relatively far away from the ground, and a distance between cells is relatively short. From a perspective of the network device, features (for example, angles) of beams do not differ clearly, and it is difficult to identify, by using a signal angle of arrival, a beam in which a terminal is located. Consequently, communication quality is affected.

To resolve the foregoing technical problem, this application further provides a method 5.

Method 5: The network device may indicate, to the terminal, a position of each of a plurality of regions, a communication resource corresponding to each region, and a random access resource corresponding to each region. After obtaining the information, the terminal may send, to the network device, a random access resource (for example, a first random access resource in the following embodiment) corresponding to a region in which the terminal is located, so that the network device determines, based on the random access resource, a communication resource (for example, a first communication resource in the following embodiment) of the region in which the terminal is located. Subsequently, the terminal may communicate with the network device by using the communication resource of the region in which the terminal is located.

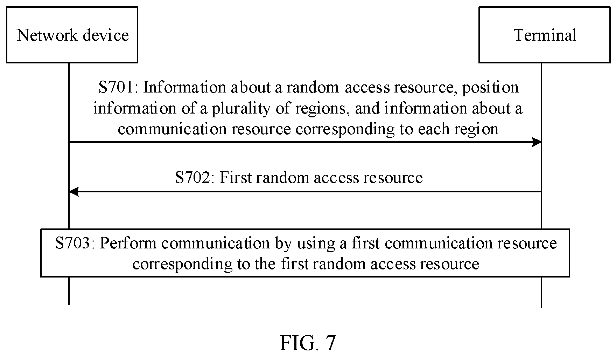

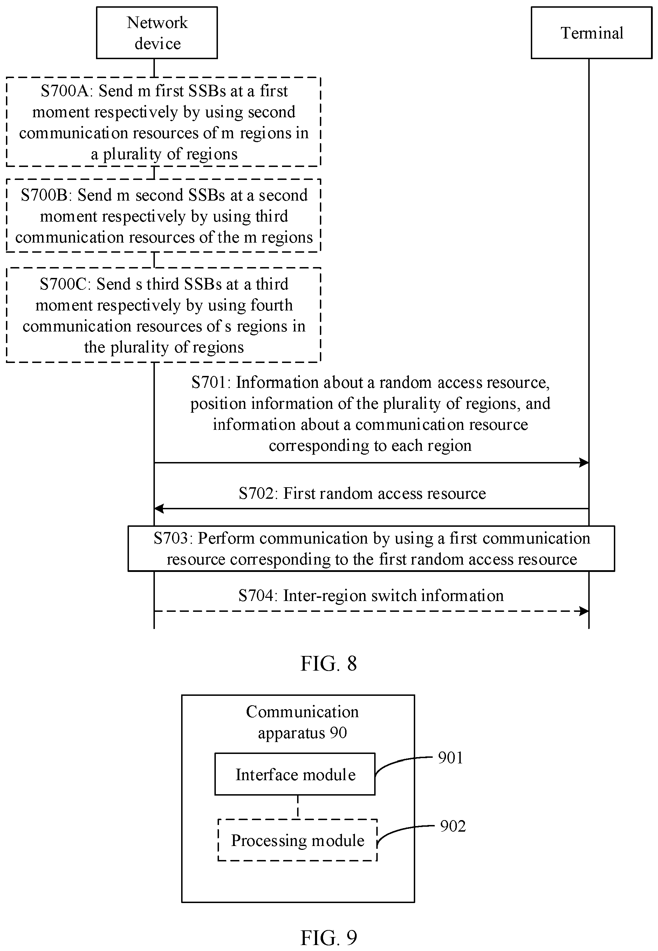

It may be understood that, in the method 5, the network device may indicate, to the terminal, the position of each of the plurality of regions, the communication resource corresponding to each region, and the random access resource corresponding to each region, so that the terminal may determine, based on the region in which the terminal is located, the first communication resource and the first random access resource that are to be used, and send the first random access resource to the network device, so that the network device determines, based on the first random access resource, the first communication resource used to communicate with the terminal. In this way, the network device may determine a communication resource (for example, a beam) used to communicate with the terminal, thereby improving communication quality. A specific process of the method 5 is described in detail in the following methods shown in FIG. 7 and FIG. 8, and details are not described herein.

The following describes in detail implementations of the foregoing method 4 and method 5 with reference to the accompanying drawings.

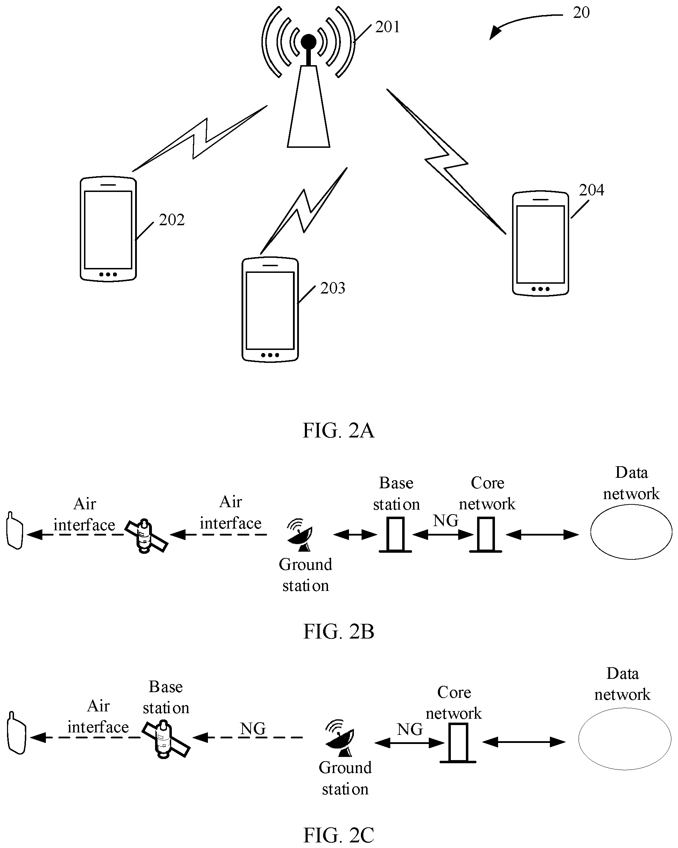

A method provided in this application may be applied to various communication systems. For example, the communication system may be an LTE system, a 5th generation (5th generation, 5G) communication system, a 3rd Generation Partnership Project (3rd Generation Partnership Project, 3GPP)-related communication system, a future evolved communication system (for example, a 6th generation (6th generation, 6G) communication system), a system integrating a plurality of systems, or the like. This is not limited. 5G may also be referred to as NR. The method provided in this application is described below by using a communication system 20 shown in FIG. 2A as an example. FIG. 2A is merely a diagram, and does not constitute a limitation on an application scenario of the technical solutions provided in this application.

FIG. 2A is a diagram of an architecture of a communication system 20 according to this application. In FIG. 2A, the communication system 20 may include one or more network devices 201 (where only one network device is shown) and a terminal 202 to a terminal 204 that can communicate with the network device 201.

In FIG. 2A, the network device may provide a wireless access service for the terminal. For example, in FIG. 2A, the terminal 203 is located in a coverage area of the network device 201. The network device 201 may send downlink data to the terminal 203 through a DL, and the terminal 203 may send uplink data to the network device 201 through a UL. For detailed descriptions of the network device and the terminal, refer to the foregoing descriptions of the network device and the terminal.

It may be understood that the communication system 20 may be applied to an NTN. For example, the communication system 20 may be applied to the communication scenarios shown in FIG. 2B to FIG. 2D.

The communication scenario shown in FIG. 2B includes a terminal, a satellite that communicates with the terminal by using an air interface, a ground station that communicates with the satellite by using an air interface, a base station that communicates with the ground station, a core network that communicates with the base station by using a next generation (next generation, NG) interface, and a data network that communicates with the core network. The network device 201 in the communication system 20 corresponds to the ground station in FIG. 2B, and may have a function of the ground station. Any one of the terminal 202 to the terminal 204 may correspond to the terminal in FIG. 2B, and may have a function of the terminal.

The communication scenario shown in FIG. 2C includes a terminal, a satellite that communicates with the terminal by using an air interface (the satellite has a function of a base station), a ground station that communicates with the satellite by using an NG interface, a core network that communicates with the ground station by using the NG interface, and a data network that communicates with the core network. The network device 201 in the communication system 20 corresponds to the satellite in FIG. 2C, and may have a function of the satellite. Any one of the terminal 202 to the terminal 204 may correspond to the terminal in FIG. 2C, and may have a function of the terminal.

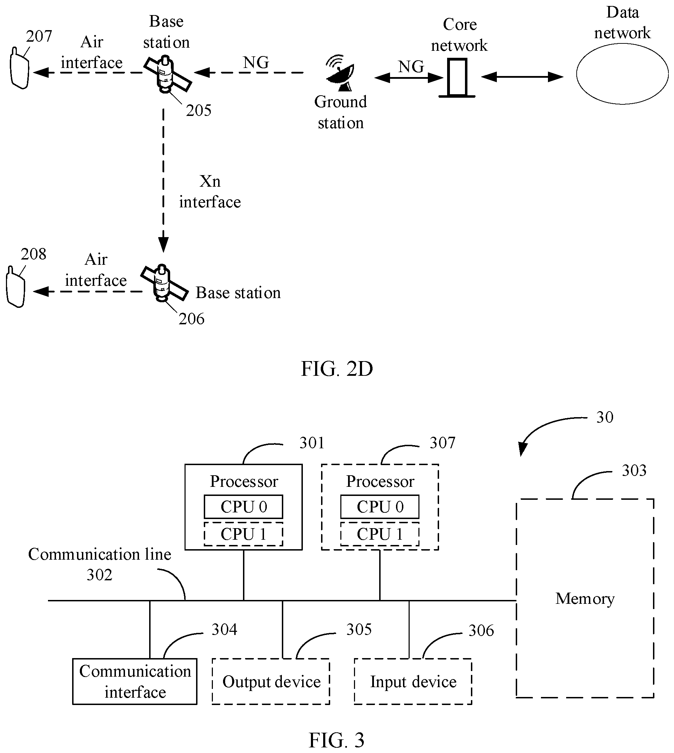

The communication scenario shown in FIG. 2D includes a terminal 207, a satellite 205 that communicates with the terminal 207 by using an air interface (the satellite 205 has a function of a base station), a ground station that communicates with the satellite 205 by using an NG interface, a core network that communicates with the ground station by using the NG interface, and a data network that communicates with the core network. The communication scenario further includes a satellite 206 that communicates with the satellite 205 by using an Xn interface (the satellite 206 has a function of a base station) and a terminal 208 that communicates with the satellite 206 by using an air interface. The network device 201 in the communication system 20 corresponds to the satellite 205 in FIG. 2D, and may have a function of the satellite 205. Any one of the terminal 202 to the terminal 204 may correspond to the terminal 207 in FIG. 2D, and may have a function of the terminal 207. Alternatively, the network device 201 in the communication system 20 corresponds to the satellite 206 in FIG. 2D, and may have a function of the satellite 206. Any one of the terminal 202 to the terminal 204 may correspond to the terminal 208 in FIG. 2D, and may have a function of the terminal 208.

The following describes devices or network elements in the communication scenarios shown in FIG. 2B to FIG. 2D.

The base station may provide a wireless access service, and schedule radio resources for a terminal, to provide a reliable wireless transmission protocol, a reliable data encryption protocol, and the like.

The core network may provide at least one service of user access control, mobility management, session management, and user authentication or charging. The core network may include a plurality of function entities, for example, may be classified into a control plane entity and a data plane entity. The control plane entity may include an access and mobility management function (access and mobility management function, AMF) entity, and is configured to be responsible for user access management, authentication, and mobility management. The data plane entity may include a user plane function (user plane function, UPF) entity, configured to be responsible for functions such as managing user plane data transmission and traffic statistics collection.

The ground station may be responsible for forwarding signaling and service data between a satellite base station and the core network.

The data network may be responsible for providing a data service for a user, for example, an application server (application server, AS), and may be deployed in an operator network or a network of a third-party content provider (context provider).

An air interface is a radio link between a terminal and a base station. The air interface in this application may be various types of air interfaces. For example, for a 5G network, the air interface is a 5G air interface.

An Xn interface is an interface between base stations and is mainly used for signaling interaction, for example, a switch.

An NG interface is an interface between the base station and the core network, and mainly exchanges non-access stratum (non-access stratum, NAS) signaling or other signaling of the core network, and service data of a user.

The communication scenarios shown in FIG. 2B to FIG. 2D use a 5G network as an example. If the 5G network is replaced with a 4G network, an Xn interface in the figure may be replaced with an X2 interface, and an NG interface may be replaced with an S1 interface.

It may be understood that the communication system 20 shown in FIG. 2A is merely used as an example, and is not intended to limit the technical solutions of this application. A person skilled in the art should understand that, in a specific implementation process, the communication system 20 may further include another device, and a quantity of network devices and a quantity of terminals may also be determined based on a specific requirement. This is not limited.

Optionally, each device (for example, a network device or a terminal) in FIG. 2A in this application may also be referred to as a communication apparatus, and may be a general-purpose device or a dedicated device. This is not specifically limited in this application.

Optionally, related functions of each device (for example, the network device or the terminal) in FIG. 2A in this application may be implemented by one device, or may be jointly implemented by a plurality of devices, or may be implemented by one or more functional modules in one device. This is not specifically limited in this application. It may be understood that the foregoing function may be a network element in a hardware device, or may be a software function running on dedicated hardware, or a combination of hardware and software, or an instantiated virtualized function on a platform (for example, a cloud platform).

During specific implementation, each device (for example, the network device or the terminal) in FIG. 2A in this application may use a composition structure shown in FIG. 3, or include components shown in FIG. 3. FIG. 3 is a diagram of a hardware structure of a communication apparatus to which this application is applicable. The communication apparatus 30 includes at least one processor 301 and at least one communication interface 304, to implement the method provided in this application. The communication apparatus 30 may further include a communication line 302 and a memory 303.

The processor 301 may be a central processing unit (central processing unit, CPU), a microprocessor, an application-specific integrated circuit (application-specific integrated circuit, ASIC), or one or more integrated circuits configured to control program execution in the solution of this application.

The communication line 302 may include a path for transferring information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 303 may be a read-only memory (read-only memory, ROM) or another type of static storage device that can store static information and instructions, or may be a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store desired program code in a form of an instruction or a data structure and can be accessed by a computer. This is not limited. The memory may exist independently, and is coupled to the processor 301 by using the communication line 302. The memory 303 may alternatively be integrated with the processor 301. Usually, the memory provided in this application may be non-volatile.

The memory 303 is configured to store computer-executable instructions for performing the solutions provided in this application, and the processor 301 controls execution of the computer-executable instructions. The processor 301 is configured to execute the computer-executable instructions stored in the memory 303, to implement the method provided in this application. Alternatively, optionally, in this application, the processor 301 may perform a processing-related function in a method provided below in this application, and the communication interface 304 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive an input of a user in a plurality of manners. For example, the input device 306 may be a mouse, a keyboard, a touchscreen device, a sensor device, or the like.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or different component arrangements may be used.

The following describes the method provided in this application with reference to the accompanying drawings. Network elements in the following embodiments may have the components shown in FIG. 3, and details are not described again.

It may be understood that names of messages between network elements, names of parameters in messages, or the like in the following embodiments of this application are merely examples, and there may alternatively be other names during specific implementation. This is not specifically limited in this application.

It may be understood that in this application, "sending information to ... (a terminal)" may be understood as that a destination of the information is the terminal, and may include directly or indirectly sending the information to the terminal. "Receiving information from (a terminal)" may be understood as that a source of the information is the terminal, and may include directly or indirectly receiving the information from the terminal. Information may undergo necessary processing, for example, a format change, between the source for sending the information and the destination. However, the destination may understand valid information from the source. Similar descriptions in this application may be construed in a similar manner, and details are not described herein again.

It may be understood that, in this application, "/" may represent an "or" relationship between associated objects. For example, A/B may represent A or B. The term "and/or" may be used to describe three relationships that exist between associated objects. For example, A and/or B may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with a same function or similar functions. Terms such as "first" and "second" do not limit a quantity and an execution order, and the terms such as "first" and "second" do not indicate a definite difference. In this application, the term "example", "for example", or the like is used to represent an example, an illustration, or a description. Any embodiment or design scheme described as "example" or "for example" should not be construed as being more preferred or advantageous than another embodiment or design scheme. Use of the terms such as "example" or "for example" is intended to present a related concept in a specific manner for ease of understanding.

It may be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, the specific features, structures, or characteristics may be combined in one or more embodiments in any appropriate manner. It may be understood that sequence numbers of processes do not mean execution orders in various embodiments of this application. The execution orders of the processes should be determined based on functions and internal logic of the processes, and should not be construed as any limitation on implementation processes of this application.

It may be understood that, in this application, an "indication" may include a direct indication and an indirect indication, or may include an explicit indication and an implicit indication. When a piece of indication information indicates A, the indication information may directly indicate A or indirectly indicate A, but this does not mean that the indication information necessarily carries A. Information indicated by a piece of information (such as information about a random access resource, position information of a plurality of regions, or information about a communication resource described below) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, where an association relationship exists between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

It may be understood that in this application, "when...", "in a case of ...", "provided that", and "if" all mean that corresponding processing is performed in an objective case, and are not intended to limit a time, do not require a determining action during implementation, and do not mean that there is another limitation.

"Simultaneously" in this application may be understood as being at a same time point, may be understood as being within a time period, or may be understood as being within a same periodicity.

In this application, "a plurality of" may be understood as two or more, unless otherwise specified. For example, a plurality of regions may be understood as two or more regions.

In this application, unless otherwise specified, "greater than or equal to" may be replaced with "greater than" or "equal to"; and "less than or equal to" may be replaced with "less than" or "equal to". For example, "A is greater than or equal to B" may be replaced with "A is greater than B", or replaced with "A is equal to B"; and "A is less than or equal to B" may be replaced with "A is less than B", or replaced with " A is equal to B".

It may be understood that, in this application, a network device and/or a terminal may perform some or all steps in this application. These steps are merely examples. In this application, other steps or variations of various steps may alternatively be performed. In addition, the steps may be performed in an order different from an order shown in this application, and not all of the steps in this application are necessarily performed.

It may be understood that, in the method provided below in this application, the method is illustrated by using an example in which the network device and the terminal are used as execution bodies of interaction illustration. However, the execution bodies of the interaction illustration are not limited in this application. For example, the network device in the method provided in the following embodiments of this application may be a chip, a chip system, or a processor that supports the server in implementing the method, or may be a logical node, a logical module, or software that can implement all or some functions of the network device. Alternatively, the terminal in the method provided in the following embodiments of this application may be a chip, a chip system, or a processor that supports the terminal in implementing the method, or may be a logical node, a logical module, or software that can implement all or some functions of the terminal.

FIG. 4 shows a communication method provided in this application, to resolve a problem that a quantity of SSBs supported by a cell does not match a quantity of beam positions required by a coverage area of a network device. The communication method may include the following steps.

S401: A network device sends n first SSBs at a first moment respectively by using first communication resources of n regions in p regions.

In this application, the network device may be the network device 201 in the communication system 20 shown in FIG. 2A. A coverage area of the network device may be partitioned as p regions, and each of the p regions includes a plurality of beam positions. Some regions in the p regions may be combined into one cell, to obtain q cells. For example, in the p regions, every n regions are combined into one cell, where n is an integer greater than 1, and n is less than p. It may be understood that terminals in the regions corresponding to the first communication resources may receive corresponding first SSBs.

In a possible design, the first communication resource includes at least one of a beam, an antenna port, a transmission reception point, or a transceiver (transmitter & receiver, TRX).

In a possible design, the first SSB includes an identifier of a cell, for example, a PCI. Optionally, the identifier of the cell further includes a cell global identifier (cell global identifier, CGI). In this way, the terminal that receives the first SSB can determine a cell in which the terminal is located.

Optionally, the first SSB further includes an identifier of the first SSB, a PSS, an SSS, and a PBCH. It may be understood that the identifier (for example, an SSB index) of the first SSB may enable the terminal that receives the first SSB to determine the identifier of the first SSB; the PSS and the SSS may enable the terminal that receives the first synchronization signal block to perform downlink synchronization; and the PBCH may enable the terminal that receives the first SSB to determine timing-related information and obtain the SIB1.

In a possible implementation, the network device sends the first SSB at the first moment by using the first communication resource corresponding to each of the n regions. In other words, the network device needs to send n first SSBs at the first moment. Because the n regions belong to a same cell, the n first SSBs include same content. Specifically, identifiers, PSSs, SSSs, and PBCHs of cells included in the n first SSBs are all the same.

For example, the first communication resource is a beam and n is equal to 3. At the first moment, the network device sends the first SSB by using a beam 1 corresponding to a region 1, sends the first SSB by using a beam 2 corresponding to a region 2, and sends the first SSB by using a beam 3 corresponding to a region 3.

Based on the method shown in FIG. 4, during cell planning, p regions covered by the network device may be combined to reduce a quantity of cells included in the network device, and the first SSBs are sent to different regions (for example, each of the n regions) in a same cell by using different communication resources, so that beam positions corresponding to the communication resources are scanned by using SSBs. Based on this logic, subsequently, the network device may scan other beam positions by using a similar method, to complete scanning of the entire coverage area of the network device within a time period by using SSBs. In addition, compared with the foregoing method 1 and method 2, in the method shown in FIG. 4, the SSB does not need to be extended. Compared with the foregoing method 3, in the method shown in FIG. 4, a terminal in a connected state can be prevented from frequently performing cell switches in an earth moving beam scenario, thereby reducing signaling overheads or switch overheads. Moreover, PCI collisions can also be reduced.

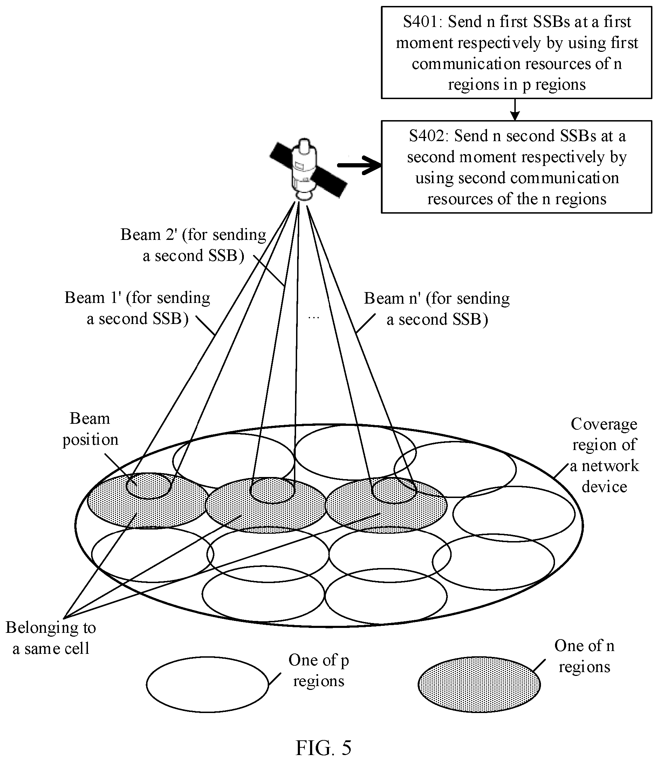

Optionally, in a possible implementation of the method shown in FIG. 4, the network device may scan, at the second moment, beam positions other than those scanned at the first moment in the n regions, to implement scanning in the n regions by using SSBs. Specifically, as shown in FIG. 5, the method shown in FIG. 4 further includes the following step:

S402: The network device sends n second SSBs at a second moment respectively by using second communication resources of the n regions.

In a possible implementation, the network device sends the second SSB at the second moment by using the second communication resource corresponding to each of the n regions. Correspondingly, a terminal in a region corresponding to the second communication resource may receive the corresponding second SSB.

The second communication resource includes at least one of a beam, an antenna port, a transmission reception point, or a transceiver.

Optionally, for a same region, the second communication resource is different from the first communication resource, so that beam positions corresponding to the second SSB and the first SSB are different. In an example in which n is equal to 3, the network device sends the first SSB at the first moment by using the beam 1 corresponding to the region 1, sends the first SSB by using the beam 2 corresponding to the region 2, and sends the first SSB by using the beam 3 corresponding to the region 3. Subsequently, the network device adjusts directions of the beam 1 to the beam 3 to obtain a beam 4 to a beam 6, sends the second SSB at the second moment by using the beam 4 corresponding to the region 1, sends the second SSB by using the beam 5 corresponding to the region 2, and sends the second SSB by using the beam 6 corresponding to the region 3.

In a possible design, the second SSB includes an identifier of a cell, for example, a PCI. Optionally, the identifier of the cell further includes a CGI. Optionally, the second SSB further includes an identifier of the second SSB, a PSS, an SSS, and a PBCH.

It may be understood that because the n regions belong to a same cell, the n second SSBs include same content, and an identifier of a cell included in the second SSB is the same as an identifier of a cell included in the first SSB.

Optionally, content included in the second SSB is not completely the same as content included in the first SSB. For example, the identifier of the SSB included in the second SSB is different from the identifier of the SSB included in the first SSB. The PBCH included in the second SSB may be the same as or different from the PBCH included in the first SSB. The PSS included in the second SSB may be the same as or different from the PSS included in the first SSB. The SSS included in the second SSB may be the same as or different from the SSS included in the first SSB.

It may be understood that when a quantity of beam positions included in each of the n regions is greater than 2, the network device may further send n fourth SSBs respectively by using fourth communication resources of the n regions, and so on, until all the beam positions in the n regions are scanned by using SSBs.

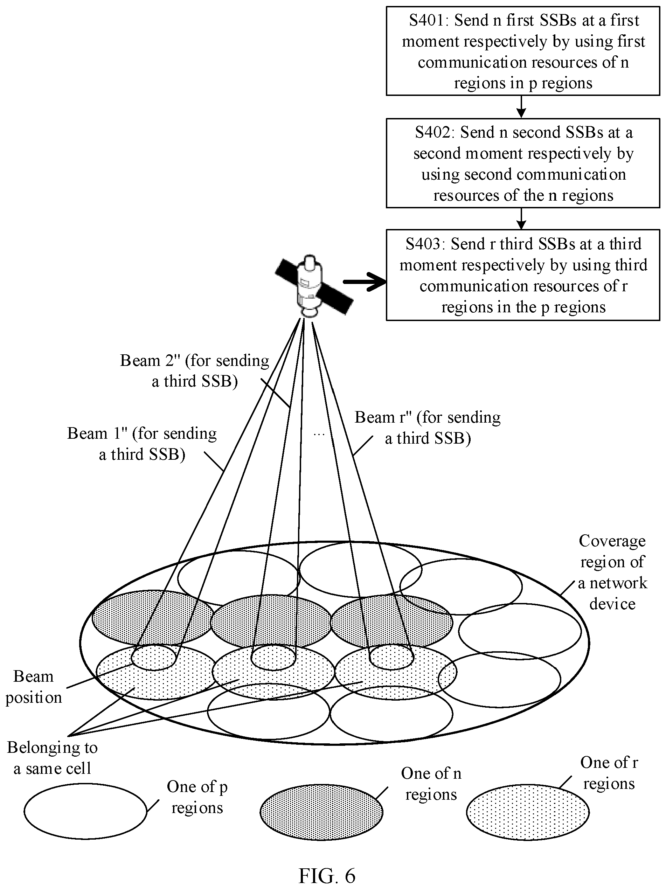

Optionally, in a possible implementation of the method shown in FIG. 4, the network device may scan, at a third moment, other regions than the n regions in the p regions, to implement scanning in the coverage area of the network device by using SSBs. Specifically, as shown in FIG. 6, the method shown in FIG. 5 may further include the following step:

S403: The network device sends r third SSBs at a third moment respectively by using third communication resources of r regions in the p regions.

In a possible implementation, the network device sends the third SSB at the third moment by using the third communication resource corresponding to each of the r regions. Correspondingly, a terminal in a region corresponding to the third communication resource may receive the corresponding third SSB.

The r regions are regions other than the n regions in the p regions, r is an integer greater than 1, r is less than p, and r+n is less than or equal to p. The r regions belong to a same cell. Optionally, cells to which the r regions belong are different from cells to which the n regions belong. It may be understood that r may be equal to n or may not be equal to n. For example, if p is equal to 15 and n is equal to 3, r is equal to 3, indicating that 15 regions are partitioned as five cells, and each cell includes three regions. For another example, if p is equal to 17 and n is equal to 3, r is equal to 3 or 2, indicating that 15 regions are partitioned as six cells, where quantities of regions included in the five cells are the same, that is, all are 3, and the remaining cell includes two regions. If the r regions belong to one of the five cells, r is equal to 3. If the r regions belong to the remaining cell, r is equal to 2.

In a possible design, the third communication resource includes at least one of a beam, an antenna port, a transmission reception point, or a transceiver.

In a possible design, the third SSB includes an identifier of a cell, for example, a PCI. Optionally, the identifier of the cell further includes a CGI. Optionally, the third SSB further includes an identifier of the third SSB, a PSS, an SSS, and a PBCH.

It may be understood that because the r regions belong to a same cell, the r third SSBs include same content.

Optionally, content included in the third SSB is not completely the same as or completely different from content included in the first SSB. For example, an identifier of a cell included in the third SSB is different from an identifier of a cell included in the first SSB. The identifier of the SSB included in the third SSB is the same as or different from the identifier of the SSB included in the first SSB. The PBCH included in the third SSB is different from the PBCH included in the first SSB. The PSS included in the third SSB is different from the PSS included in the first SSB. The SSS included in the third SSB is different from the SSS included in the first SSB. Similarly, content included in the third SSB is not completely the same as or completely different from content included in the second SSB.

It may be understood that when the p regions further include other regions than the n regions and the r regions, the network device may further continue to send SSBs to the other regions, until all the beam positions in the p regions are scanned by using SSBs.

It may be understood that the actions of the network device in S401 to S403 may be performed by the processor 301 in the communication apparatus 30 shown in FIG. 3 by invoking the application program code stored in the memory 303. This is not limited in this application.

FIG. 7 shows still another communication method provided in this application, to resolve a problem that it is difficult for a network device to determine a beam in which a terminal is located. The communication method may include the following steps.

S701: A network device sends, to a terminal, information about a random access resource, position information of a plurality of regions, and information about a communication resource corresponding to each region. Correspondingly, the terminal receives, from the network device, the information about the random access resource, the position information of the plurality of regions, and the information about the communication resource corresponding to each region.

In this application, the network device may be the network device 201 in the communication system 20 shown in FIG. 2A. The terminal is located in a coverage area of the network device. For example, the terminal is a terminal 202, a terminal 203, or a terminal 204 in the communication system 20. A coverage area of the network device may be partitioned as several regions, and each region includes a plurality of beam positions. Some regions in the several regions may be combined into one cell, so as to reduce a quantity of cells in a coverage area. For example, in the several regions, every n regions are combined into one cell, where n is an integer greater than 1, and n is less than a total quantity of the several regions.

The plurality of regions in S701 are the several regions, or the plurality of regions are regions included in any one of the plurality of cells into which the coverage area is partitioned. The position information of the plurality of regions may indicate a position of each of the plurality of regions. For example, the position information of the plurality of regions includes coordinates of a center point of each region. Alternatively, the position information of the plurality of regions includes coordinates of a center point of any one of the plurality of regions, and an offset (or a differential value) of coordinates of each of the plurality of regions other than the any region relative to the center point.

Optionally, the position information of the plurality of regions further includes at least one of a radius of each region or boundary information of each region.

In this application, each region corresponds to a communication resource. The information about the communication resource corresponding to each region indicates the communication resource corresponding to the region. The communication resource corresponding to the any region includes at least one of a beam, an antenna port, a transmission reception point, or a transceiver. It may be understood that a communication resource corresponding to a region includes a beam, which may be understood as that the beam may be used to scan the region; a communication resource corresponding to a region includes an antenna port, which may be understood as that the antenna port may be used for communication of a terminal in the region; a communication resource corresponding to a region includes a transmission reception point, which may be understood as that the transmission reception point may be used to send information to a terminal in the region or receive information sent by a terminal in the region; and a communication resource corresponding to a region includes a transceiver, which may be understood as that the transceiver may be configured to send information to a terminal in the region or receive information sent by a terminal in the region.

For example, the information about the communication resource corresponding to each region includes an identifier of the communication resource. For example, the communication resource includes a beam. Content included in the position information of the plurality of regions and the information about the communication resource corresponding to each region may be shown in Table 1-1 or Table 2. In Table 1-1, the position information of the plurality of regions includes Earth centered inertial coordinate system (Earth centered inertial, ECI) coordinates of a center point of the region 1, ECI coordinates of a center point of the region 2, ECI coordinates of a center point of the region 3, .... The information about the communication resource includes a beam 1 (that is, an identifier of a beam corresponding to the region 1), a beam 2 (that is, an identifier of a beam corresponding to the region 2), a beam 3 (that is, an identifier of a beam corresponding to the region 3), ....

Table 1-1

| Position information of a plurality of regions | Information about communication resources |
|---|---|
| ECI coordinates of the center point of the region 1 | Beam 1 |
| ECI coordinates of the center point of the region 2 | Beam 2 |
| ECI coordinates of the center point of the region 3 | Beam 3 |
| ... | ... |

In Table 2, the position information of the plurality of regions includes ECI coordinates of the center point of the region 1, a first differential value (that is, a differential value between ECI coordinates of the center point of the region 2 and ECI coordinates of the center point of the region 1), a second differential value (that is, a differential value between ECI coordinates of the center point of the region 3 and ECI coordinates of the center point of the region 1, or a differential value between ECI coordinates of the center point of the region 3 and ECI coordinates of the center point of the region 2), .... The information about the communication resource includes a beam 1 (that is, an identifier of a beam corresponding to the region 1), a beam 2 (that is, an identifier of a beam corresponding to the region 2), a beam 3 (that is, an identifier of a beam corresponding to the region 3), ....

Table 2

| Position information of a plurality of regions | Information about communication resources |
|---|---|
| ECI coordinates of the center point of the region 1 | Beam 1 |
| First differential value | Beam 2 |
| Second differential value | Beam 3 |
| ... | ... |

Optionally, the communication resource indicated by the information about the communication resource is a communication resource that can be simultaneously used by the network device. The information about the communication resource shown in Table 1-1 and Table 2 is used as an example. The network device may simultaneously use the beam 1, the beam 2, the beam 3, and the like to send signals.

In this application, the information about the random access resource indicates a random access resource corresponding to each region. In this application, the random access resource includes a preamble (preamble). It may be understood that each region corresponds to at least one preamble. For example, the information about the random access resource includes an identifier of a preamble corresponding to each region.

In a possible design, when the information about the random access resource indicates the random access resource corresponding to each region, the random access resource corresponding to each region may be directly indicated, or the random access resource corresponding to each region may be indirectly indicated. For example, content indicated by the information about the random access resource may be shown in Table 3 or Table 4.

In Table 3, the information about the random access resource directly indicates a random access resource corresponding to each region. Specifically, the region 1 corresponds to a preamble 1 to a preamble 20, the region 2 corresponds to a preamble 21 to a preamble 40, and the region 3 corresponds to a preamble 41 to a preamble 60, .... In other words, the terminal located in the region 1 may perform random access by using a preamble in the preamble 1 to the preamble 20, the terminal located in the region 2 may perform random access by using a preamble in the preamble 21 to the preamble 40, and the terminal located in the region 3 may perform random access by using a preamble in the preamble 41 to the preamble 60.

Table 3

| Identifier of a region | Identifier of a random access resource corresponding to a region |
|---|---|
| Region 1 | Preamble 1 to preamble 20 |
| Region 2 | Preamble 21 to preamble 40 |
| Region 3 | Preamble 41 to preamble 60 |
| ... | ... |

In Table 4, the information about the random access resource indirectly indicates a random access resource corresponding to each region. Specifically, the information about the random access resource indicates the random access resources corresponding to the communication resources. Because there is a correspondence between the communication resources and the plurality of regions, the random access resource corresponding to each region may be determined based on the information about the random access resource. For example, Table 4 shows that the beam 1 corresponds to the preamble 1 to the preamble 20. It is determined, based on Table 1-1 or Table 2, that the beam 1 corresponds to the region 1. Therefore, it is determined that the preamble 1 to the preamble 20 correspond to the region 1. Table 4 shows that the beam 2 corresponds to the preamble 21 to the preamble 40. It is determined, based on Table 1-1 or Table 2, that the beam 2 corresponds to the region 2. Therefore, it is determined that the preamble 21 to the preamble 40 correspond to the region 2. Table 4 shows that the beam 3 corresponds to the preamble 41 to the preamble 60. It is determined, based on Table 1-1 or Table 2, that the beam 3 corresponds to the region 3. Therefore, it is determined that the preamble 41 to the preamble 60 correspond to the region 3.

Table 4

| Identifier of a communication resource | Identifier of a random access resource corresponding to a region |
|---|---|
| Beam 1 | Preamble 1 to preamble 20 |
| Beam 2 | Preamble 21 to preamble 40 |

(continued)

| Identifier of a communication resource | Identifier of a random access resource corresponding to a region |
|---|---|
| Beam 3 | Preamble 41 to preamble 60 |
| ... | ... |

In a possible design, the information about the random access resource, the position information of the plurality of regions, and the information about the communication resource corresponding to each region are included in system information (system information, SI), for example, a system information block (system information block, SIB) message (for example, a SIB1 message). Alternatively, the information about the random access resource, the position information of the plurality of regions, and the information about the communication resource corresponding to each region are included in different messages. For example, the information about the random access resource is included in one message, and the position information of the plurality of regions and the information about the communication resource corresponding to each region are included in another message.

S702: The terminal sends a first random access resource to the network device. Correspondingly, the network device receives the first random access resource from the terminal.

In this application, the first random access resource is included in the random access resource indicated by the information about the random access resource, and is a random access resource corresponding to a region in which the terminal is located. The region in which the terminal is located is determined based on a location of the terminal and position information of a plurality of regions.

It may be understood that the terminal receives the information about the random access resource, the position information of the plurality of regions, and the information about the communication resource corresponding to each region, that is, obtains the information. Subsequently, the terminal may determine, based on the location of the terminal, the region in which the terminal is located, and then determine, based on the region in which the terminal is located, a communication resource and a random access resource that correspond to the region. The communication resource (referred to as a first communication resource below) corresponding to the region in which the terminal is located is a communication resource used for communication between the terminal and the network device. A random access resource (that is, the first random access resource) corresponding to the region in which the terminal is located is a resource that can be used by the terminal for random access.

Specifically, a positioning module (for example, a global navigation satellite system (global navigation satellite system, GNSS) installed in the terminal) of the terminal obtains the location of the terminal. The terminal determines, based on the location of the terminal and the position information of the plurality of regions, the region in which the terminal is located. For example, the terminal determines a region in which coordinates of a center point closest to the location of the terminal are located as a region in which the terminal is located; or the terminal determines a range of each region based on position information of a plurality of regions, and determines a region in which the terminal is located based on the location of the terminal. Subsequently, the terminal may determine the first communication resource based on the region in which the terminal is located and the communication resource corresponding to each region. In addition, if the information about the random access resource directly indicates the random access resource corresponding to each region, the terminal may determine the first random access resource based on the region in which the terminal is located and the random access resource corresponding to each region. Alternatively, if the information about the random access resource directly indicates the random access resource corresponding to each communication resource, the terminal may determine, based on the first communication resource and the random access resource corresponding to each communication resource, the random access resource corresponding to the first communication resource, that is, the first random access resource.

It should be understood that if there are a plurality of random access resources corresponding to the region in which the terminal is located, the terminal may determine one random access resource from the plurality of random resources as the first random access resource. Similarly, if there are a plurality of random access resources corresponding to the first communication resource, the terminal may determine one random access resource from the plurality of random resources as the first random access resource.

It may be understood that, after determining the first random access resource, the terminal may send the first random access resource to the network device, so that the network device determines the first communication resource based on the first random access resource, and communicates with the terminal based on the first communication resource.

In a possible implementation, the terminal reports the first random access resource to the network device by using a random access process. For example, the terminal sends a first message (Msg1) to the network device, where the first message includes the first random access resource.

S703: The network device communicates with the terminal by using the first communication resource.

It may be understood that, after receiving the first random access resource, the network device may determine, based on the information about the random access resource and the information about the communication resource corresponding to each region, the first communication resource corresponding to the first random access resource, and then communicate with the terminal by using the first communication resource, or determine, based on the information about the random access resource, the first communication resource corresponding to the first random access resource, and then communicate with the terminal by using the first communication resource.

For example, if the information about the random access resource directly indicates the random access resource corresponding to each region, after receiving the first random access resource, the network device may determine, based on the first random access resource and the information about the random access resource, the region corresponding to the first random access resource, and determine, based on the information about the communication resource corresponding to each region, the communication resource (that is, the first communication resource) corresponding to the region corresponding to the first random access resource. Alternatively, if the information about the random access resource directly indicates the random access resource corresponding to each communication resource, after receiving the first random access resource, the network device may determine the first communication resource based on the first random access resource and the information about the random access resource. In this case, both the network device and the terminal determine that they can communicate with each other by using the first communication resource. Subsequently, the network device may communicate with the terminal by using the first communication resource. For example, the network device sends a random access response (random access response, RAR) or a second message (Msg2) to the terminal by using the first communication resource.

The actions of the network device or the terminal in S701 to S703 may be performed by the processor 301 in the communication apparatus 30 shown in FIG. 3 by invoking the application program code stored in the memory 303. This is not limited in this application.

Based on the method shown in FIG. 7, the network device may indicate, to the terminal, the position of each of the plurality of regions, the communication resource corresponding to each region, and the random access resource corresponding to each region, so that the terminal may determine, based on the region in which the terminal is located, the first communication resource and the first random access resource that are to be used, and send the first random access resource to the network device, so that the network device determines, based on the first random access resource, the first communication resource used to communicate with the terminal. In this way, the network device may determine a communication resource (for example, a beam) used to communicate with the terminal, thereby improving communication quality.

Optionally, in a possible implementation of the method shown in FIG. 7, the information about the random access resource indicates a preamble corresponding to each region, so that the terminal selects a preamble based on a location of the terminal to access the network device, and the network device determines, based on the preamble, the communication resource for communicating with the terminal. Specifically, preambles in a random access channel occasion (random access channel occasion, RO) may be assigned to each of a plurality of regions.

In a possible design, the network device configures partition information of the random access resources in a SIB message, where each piece of partition information corresponds to one of a plurality of regions, and preambles corresponding to the plurality of regions are included in one RO.

For example, the network device may configure, by using the content shown in Table 5, a function of the information about the random access resource to indicate a preamble corresponding to each region. In Table 5, a value of "NTNcellCombining-r19" is "true", indicating that a function of the information about the random access resource is to indicate a preamble corresponding to each region. It should be understood that, if a value of "NTNcellCombining-r19" is "false", it may indicate that the network device does not enable or configure the foregoing function.

Table 5

| FeatureCombination-r17 ::= SEQUENCE { | | | |
| --- | --- | --- | --- |
| redCap-r17 | ENUMERATED {true} | OPTIONAL, | -- Need R |
| smallData-r17 | ENUMERATED {true} | OPTIONAL, | -- Need R |
| nsag-r17 | NSAG-List-r17 | OPTIONAL, | -- Need R |
| msg3-Repetitions-r17 | ENUMERATED {true} | OPTIONAL, | -- Need R |
| **NTNcellCombining-r19** | **ENUMERATED {true}** | **OPTIONAL,** | **-- Need R** |

For example, the network device may configure, by using content shown in Table 6, partition information of a random access resource corresponding to a region. In Table 6, an information element (information element, IE) "FeatureCombinationPreambles" is used to configure partition information of a random access resource corresponding to one region. A type of a parameter "startPreambleForThisPartition" is an integer value, and may include N values, indicating that preambles in one RO are partitioned as N partitions. For example, a quantity of communication resources is N or a quantity of a plurality of regions is N. Therefore, preambles in one RO may be partitioned as N partitions. Each value may represent an index (index) of a start preamble in each partition of preambles. A parameter "numberOfPreamblesPerSSB-ForThisPartition" indicates a quantity of preambles included in each partition of preambles. For example, one RO includes 64 preambles. If a value of "startPreambleForThisPartition" is {1, 33}, and a value of "numberOfPreamblesPerSSB-ForThisPartition" is {32, 32}, it indicates that the RO is partitioned as two partitions (each partition may correspond to one region or communication resource), an index of a start preamble in a first partition of preambles is 1, an index of a start preamble in a second partition of preambles is 33, and both the first partition of preambles and the second partition of preambles include 32 preambles, that is, indexes of preambles included in the first partition of preambles are 1 to 32, and indexes of preambles included in the second partition of preambles are 33 to 64.

Table 6

| |
|---|
| FeatureCombinationPreambles-r17 ::=     SEQUENCE {<br><br>    featureCombination-r17                FeatureCombination-r17,<br><br>    startPreambleForThisPartition-r17    **SEQUENCE (SIZE (1.. MaxBeamNum-NTN-r19)) OF INTEGER (0..63),**<br><br>    numberOfPreamblesPerSSB-ForThisPartition-r17 **SEQUENCE (SIZE (1..MaxBeamNum-NTN-r19)) OF INTEGER (1..64),**<br><br>    ssb-SharedRO-MaskIndex-r17          INTEGER (1..15)        OPTIONAL, -- |

| |
|---|
| Need S<br><br>        ...<br><br>    } |

Optionally, in a possible implementation of the method shown in FIG. 7, the information about the random access resource indicates an RO corresponding to each region, so that the terminal determines a corresponding RO based on a location of the terminal, and selects a preamble from the RO to access the network device, and the network device determines, based on the preamble, the communication resource for communicating with the terminal.

In a possible design, the network device configures partition information of the random access resources in a SIB message, where each piece of partition information corresponds to one of a plurality of regions, and preambles corresponding to different regions belong to different ROs.

For example, the network device may configure, by using content shown in Table 7, partition information of a random access resource corresponding to a region. In Table 7, for a description of the information element "FeatureCombinationPreambles", refer to the foregoing description. A parameter "ssb-sharedRO-maskindex-r19" may indicate at least one RO, indicating the RO corresponding to the region. For example, the parameter "ssb-sharedRO-maskindex-r19" may indicate a row index, and an RO corresponding to the row index may be determined through table lookup.

Table 7

| FeatureCombinationPreambles-r17 ::= | SEQUENCE { | |
|---|---|---|
| featureCombination-r17 | FeatureCombination-r17, | |
| ssb-SharedRO-MaskIndex-r17 | INTEGER (1..15) | OPTIONAL, -- Need S |
| **ssb-SharedRO-MaskIndex-r19** | **INTEGER (1..15)** | **OPTIONAL, -- Need S** |
| ... | | |
| } | | |

Optionally, a parameter "maskIndex" may be configured in the parameter "ssb-sharedRO-maskindex-r19", and indicates at least one row index. For example, if a region corresponds to two or more row indexes, this parameter may be set. For example, a value of the parameter "maskIndex" is {1, 3}. The parameter "maskIndex" indicates two partitions of ROs, which are respectively ROs corresponding to the row index 1 and the row index 3. In this example, a type of "maskIndex" is SEQUENCE. It should be understood that, in a specific application, a type of "maskIndex" may also be "INTEGER". When one region corresponds to ROs of a plurality of row indexes, each row index may be configured by using a plurality of information elements "FeatureCombinationPreambles".

It may be understood that the information element "FeatureCombinationPreambles" may further be configured with the parameter "startPreambleForThisPartition" and the parameter "numberOtPreamblesPerSSB-ForThisPartition". For example, the network device may configure, by using content shown in Table 8, partition information of a random access resource corresponding to a region. If "ssb-sharedRO-maskindex-r19" is configured in the information element "FeatureCombinationPreambles", it indicates that the parameter "startPreambleForThisPartition" and the parameter "numberOfPreamblesPerSSB-ForThisPartition" may partition the ROs specified by the parameter "ssb-sharedRO-maskindex-r19". If "ssb-sharedRO-maskindex-r19" is not configured in the information element "FeatureCombination-Preambles", it indicates that the parameter "startPreambleForThisPartition" and the parameter "numberOfPreamblesPerSSB-ForThisPartition" may partition all ROs. For example, if "ssb-sharedRO-maskindex-r19" is configured in the information element "FeatureCombinationPreambles", and "ssb-sharedRO-maskindex-r19" indicates a row index 1, indicating an RO whose index is an odd number, the parameter "startPreambleForThisPartition" and the parameter "numberOfPreamblesPerSSB-ForThisPartition" may partition ROs whose indexes are odd numbers, and do not partition ROs whose indexes are even numbers.

Table 8

| FeatureCombinationPreambles-r17 ::= | SEQUENCE { | |
|---|---|---|
| featureCombination-r17 | FeatureCombination-r17, | |
| **startPreambleForThisPartition-r17** | **INTEGER (0..63),** | |
| **numberOfPreamblesPerSSB-ForThisPartition-r17** | **INTEGER (1..64),** | |
| ssb-SharedRO-MaskIndex-r17 | INTEGER (1..15) | OPTIONAL, -- Need S |
| **ssb-SharedRO-MaskIndex-r19** | **INTEGER (1..15)** | **OPTIONAL, -- Need S** |
| ... | | |
| } | | |

In conclusion, a function of the parameter "ssb-sharedRO-maskindex-r19" may be shown in Table 9. The information element "RACH-ConfigCommon" or information element "RACH-ConfigCommonTwoStepRA" may include one or more information elements "FeatureCombinationPreambles".

Table 9

| ssb-SharedRO-MaskIndex-r19 |
| --- |

| Mask index. Indicates a subset of ROs where preambles are allocated for this feature combination. … This field is configured when there is more than one RO per SSB. If the field is absent, all ROs configured in RACH-ConfigCommon or RACH-ConfigCommonTwoStepRA containing this FeatureCombinationPreambles are shared. |
| --- |

Optionally, in a possible implementation of the method shown in FIG. 7, the information about the random access resource indicates a preamble format corresponding to each region, so that the terminal determines a format of a corresponding preamble based on a location of the terminal, and selects a preamble from preambles that meet the preamble format to access the network device, and the network device determines, based on the preamble, the communication resource for communicating with the terminal.

For example, the network device may configure an additional physical random access channel (physical random access channel, PRACH) resource group (additionalRACH-ConfigList) for the cell in "BWP-UplinkCommon". A corresponding preamble format (preamble format) can be configured in "additionalRACH-ConfigList". For example, "prach-ConfigurationIndex" may be used to configure a preamble format. The preamble format is, for example, Format 0, 1, 2, 3, A1, A2, A3, B1, B2, B3, B4, C0, or C2. Content included in "BWP-UplinkCommon" may be shown in Table 10.

Table 10

| BWP-UplinkCommon ::= | SEQUENCE { |
| --- | --- |
| AdditionalRACH-ConfigList-r17 ::= OF AdditionalRACH-Config-r17 | SEQUENCE (SIZE(1..maxAdditionalRACH-r17)) |
| AdditionalRACH-Config-r17 ::= | SEQUENCE { |
| rach-ConfigCommon-r17 | RACH-ConfigCommon |
| RACH-ConfigCommon ::= | SEQUENCE { |
| rach-ConfigGeneric | RACH-ConfigGeneric, |
| RACH-ConfigGeneric ::= | SEQUENCE { |
| prach-ConfigurationIndex | INTEGER (0..255), |
| … | |

It may be understood that "additionalRACH-ConfigList" may be associated with one of the plurality of regions, or may correspond to one of communication resources corresponding to the plurality of regions. For example, the information about the random access resource may include an additionalRACH-ConfigList index corresponding to each region, or include an additionalRACH-ConfigList index corresponding to a communication resource.

For example, that the information about the random access resource includes an additionalRACH-ConfigList index corresponding to each region is used as an example. Content included in the information about the random access resource may be shown in Table 11. In Table 11, an additionalRACH-ConfigList index corresponding to a region 1 is an index 1, an additionalRACH-ConfigList index corresponding to a region 2 is an index 2, and an additionalRACH-ConfigList index corresponding to a region 3 is an index 3. Therefore, the terminal may determine a corresponding additionalRACH-ConfigList index based on a region in which the terminal is located, determine, based on the additionalRACH-ConfigList index, a preamble format for performing random access, and initiate random access by using a preamble that meets the format. Correspondingly, after receiving the preamble, the network device may determine, based on a format of the preamble, a region in which the terminal is located, and determine the first communication resource based on the region in which the terminal is located.

Table 11

| Identifier of a region | additionalRACH-ConfigList index corresponding to each region |
|---|---|
| Region 1 | Index 1 |
| Region 2 | Index 2 |
| Region 3 | Index 3 |
| ... | ... |

For example, that the information about the random access resource includes an additionalRACH-ConfigList index corresponding to a communication resource that is a beam is used as an example. Content included in the information about the random access resource may be shown in Table 12. In Table 12, an additionalRACH-ConfigList index corresponding to a beam 1 is an index 1, an additionalRACH-ConfigList index corresponding to a beam 2 is an index 2, and an additionalRACH-ConfigList index corresponding to a beam 3 is an index 3. Therefore, the terminal may determine a corresponding communication resource based on a region in which the terminal is located, determine a corresponding additionalRACH-ConfigList index based on the communication resource, determine, based on the additionalRACH-ConfigList index, a preamble format for performing random access, and initiate random access by using a preamble that meets the format. Correspondingly, the network device receives the preamble, and may determine the first communication resource based on a format of the preamble.

Table 12

| Identifier of a communication resource | additionalRACH-ConfigList index corresponding to each region |
|---|---|
| Beam 1 | Index 1 |
| Beam 2 | Index 2 |
| Beam 3 | Index 3 |
| ... | ... |

It may be understood that, in comparison with a solution in which the information about the random access resource indicates the preamble corresponding to each region, or in comparison with a solution in which the information about the random access resource indicates the RO corresponding to each region, the solution in which the information about the random access resource indicates the preamble format corresponding to each region does not require a network side to perform partitioning and slicing on random access resources indicated by a same RACH configuration index, that is, the function of the information element "FeatureCombinationPreambles" does not need to be extended, and is easier to implement.

Optionally, in a possible implementation of the method shown in FIG. 7, the network device may perform scanning in the m regions of the plurality of regions at the first moment by using SSBs with different communication resources, so that the terminal in the m regions receives the first SSB, and receives a SIB based on a time-frequency resource of the SIB indicated by the first SSB, to obtain the information about the random access resource, the position information of the plurality of regions, and the information about a communication resource corresponding to each region, where m is an integer greater than 1, and m is less than a total quantity of the plurality of regions. Optionally, the m regions belong to a same cell. In this way, a plurality of regions can be combined, to reduce a quantity of cells included in the network device, reduce PCI collisions, and avoid frequent cell switches of a terminal in a connected state in an earth moving beam scenario. Therefore, signaling overheads or switch overheads can be reduced. Specifically, as shown in FIG. 8, the method shown in FIG. 7 may further include the following steps:

S700A: A network device sends m first SSBs at a first moment respectively by using second communication resources of m regions in a plurality of regions.

The first SSB includes an identifier of a cell. Identifiers of cells included in the m first SSBs are the same.

Optionally, the first SSB further includes an identifier of the first SSB, a PSS, an SSS, and a PBCH. The m first synchronization signal blocks include same content.

It may be understood that a specific process of S700A is similar to the process of S401. Therefore, refer to the corresponding description in S401. Details are not described herein again.

Optionally, in a possible implementation of the method shown in FIG. 7, the network device may scan, at the second moment, beam positions other than those scanned at the first moment in the m regions, to implement scanning in the m regions by using SSBs. Specifically, as shown in FIG. 8, the method shown in FIG. 7 may further include the following step:

S700B: The network device sends m second SSBs at a second moment respectively by using third communication resources of the m regions.

The second SSB includes an identifier of a cell. Cells included in the m second SSBs have a same identifier, and cells included in the second SSB and the first SSB have a same identifier.

Optionally, the second SSB further includes an identifier of the second SSB, a PSS, an SSS, and a PBCH. The m second synchronization signal blocks include same content.

It may be understood that a specific process of S700B is similar to the process of S402. Therefore, refer to the corresponding description in S402. Details are not described herein again.

Optionally, in a possible implementation of the method shown in FIG. 7, the network device may scan, at a third moment, other regions than the m regions in the plurality of regions, to implement scanning in the coverage area of the network device by using SSBs. Specifically, as shown in FIG. 8, the method shown in FIG. 7 may further include the following step:

S700C: The network device sends s third SSBs at a third moment respectively by using fourth communication resources of s regions in the plurality of regions.

The s regions belong to a same cell. The third SSB includes an identifier of a cell. Cells included in the s third SSBs have a same identifier, and cells included in the third SSB and the first SSB have different identifiers.

Optionally, the third SSB further includes an identifier of the third SSB, a PSS, an SSS, and a PBCH. The m third synchronization signal blocks include same content.

It may be understood that a specific process of S700C is similar to the process of S403. Therefore, refer to the corresponding description in S403. Details are not described herein again.

Optionally, in a possible implementation of the method shown in FIG. 7, the network device may configure inter-region switch information for the terminal, so that the terminal quickly switches between regions based on the inter-region switch information. This can reduce measurement overheads of the network device and the terminal, and may further reduce power consumption of the terminal. Specifically, as shown in FIG. 8, the method shown in FIG. 7 may further include the following step:

S704: The network device sends inter-region switch information to the terminal. Correspondingly, the terminal receives the inter-region switch information from the network device.

In this application, the inter-region switch information may indicate regions to which the terminal switches in sequence in a first cell and condition information for triggering each inter-region switch. In this way, when the terminal detects that the condition information is met, the terminal may perform an inter-region switch, so that measurement overheads and signaling interaction overheads between the network device and the terminal during the inter-region switch can be avoided, and power consumption of the terminal can be further reduced.

In a possible design, the condition information for triggering any inter-region switch indicates a time of triggering the inter-region switch, or a boundary of a corresponding region. The condition information for triggering the inter-region switch may indicate, by using first duration, a time of triggering the inter-region switch, and the first duration is duration in which the terminal can camp on a corresponding region. The condition information for triggering the inter-region switch may indicate a boundary of a corresponding region by using boundary coordinates of the corresponding region.

In an example, content included in the inter-region switch information may be shown in Table 13. After receiving the inter-region switch information shown in Table 13, the terminal may start a timer 1, where duration of the timer 1 is duration 1. When the timer 1 expires, the terminal switches from the region 1 to the region 2, and starts a timer 2, where duration of the timer 2 is duration 2. When the timer 2 expires, the terminal switches from the region 2 to a next region, and so on, until the terminal switches to the region W. It should be understood that the inter-region switch information may not include an inter-region switch sequence, and the terminal sequentially performs inter-region switches based on the sequence indicated in Table 13.

Table 13

| Inter-region switch sequence | First duration | Identifier of a region |
|---|---|---|
| First switch | Duration 1 | Region 1 |

(continued)

| Inter-region switch sequence | First duration | Identifier of a region |
|---|---|---|
| Second switch | Duration 2 | Region 2 |
| ... | ... | ... |
| W$^{th}$ switch | Duration W | Region W |

In another example, content included in the inter-region switch information may be shown in Table 14. After receiving the inter-region switch information shown in Table 14, the terminal may determine, based on the boundary coordinates of the region 1, whether the terminal is still in the region 1. If the terminal is not in the region 1, the terminal switches from the region 1 to the region 2. Then, the terminal determines, based on the boundary coordinates of the region 2, whether the terminal is still in the region 2. If the terminal is not in the region 2, the terminal switches from the region 2 to a next region, and so on, until the terminal switches to the region W. It should be understood that the inter-region switch information may not include an inter-region switch sequence, and the terminal sequentially performs inter-region switches based on the sequence indicated in Table 14.

Table 14

| Inter-region switch sequence | Boundary information of a region | Identifier of a region |
|---|---|---|
| First switch | Boundary coordinates of a region 1 | Region 1 |
| Second switch | Boundary coordinates of a region 2 | Region 2 |
| ... | ... | ... |
| W$^{th}$ switch | Boundary coordinates of a region W | Region W |

In a possible implementation, the network device sends terminal-level signaling to the terminal, for example, RRC signaling, a MAC-CE, or a physical downlink shared channel (physical downlink shared channel, PDSCH). The terminal-level signaling carries inter-region switch information. Alternatively, the network device broadcasts inter-region switch information to a region in which the terminal is located, so that the terminal in the region performs inter-region switches based on the inter-region switch information.

It may be understood that the actions of the network device or the terminal in S700A to S700C and S704 may be performed by the processor 301 in the communication apparatus 30 shown in FIG. 3 by invoking the application program code stored in the memory 303. This is not limited in this application.

Embodiments mentioned above in this application may be combined when the solutions do not conflict. This is not limited.

The foregoing mainly describes the solutions provided in this application from the perspective of interaction between network elements. Correspondingly, this application further provides a communication apparatus. The communication apparatus may be the terminal in the foregoing method embodiments, an apparatus including the foregoing terminal, or a component that can be used in the terminal. Alternatively, the communication apparatus may be the network device in the foregoing method embodiments, an apparatus including the foregoing network device, or a component that can be used in the network device. It may be understood that, to implement the foregoing functions, the terminal or the network device includes corresponding hardware structures and/or software modules for performing the functions. A person skilled in the art should easily be aware that, in combination with units and algorithm operations of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

It should be understood that interaction between network elements is described above by using the terminal and a network device as an example. Actually, processing performed by the terminal is not limited to being performed only by a single network element, and processing performed by the network device is not limited to being performed only by a single network element. For example, processing performed by the network device may be separately performed by at least one of a CU, a DU, and a remote unit RU.

In this application, the network device or terminal may be partitioned as functional modules based on the foregoing method examples. For example, the functional modules may be obtained through division in a one-to-one correspondence with the functions, or two or more functions may be integrated into one processing module. The integrated module may be implemented in a form of hardware, or may be implemented in a form of a software functional module. It may be understood that division of the modules in this application is an example. The division is merely logical function division and may be other division in actual implementation.

For example, when functional modules are obtained through division in an integrated manner, FIG. 9 is a diagram of a structure of a communication apparatus 90. The communication apparatus 90 includes an interface module 901. Optionally, the communication apparatus 90 further includes a processing module 902. The interface module 901 may also be referred to as an interface unit, and is configured to perform a sending operation and a receiving operation. For example, the interface module may be an interface circuit, a transceiver machine, a transceiver, or a communication interface. The processing module 902 may also be referred to as a processing unit, is configured to perform an operation other than the sending and receiving operations, and for example, may be a processing circuit or a processor.

In some embodiments, the communication apparatus 90 may further include a storage module (not shown in FIG. 9), configured to store program instructions and data.

For example, the communication apparatus 90 is configured to implement a function of a network device. The communication apparatus 90 is, for example, the network device described in the embodiment shown in FIG. 7 or the embodiment shown in FIG. 8.

The interface module 901 is configured to send information about a random access resource, position information of a plurality of regions, and information about a communication resource corresponding to each region. The information about the random access resource indicates a random access resource corresponding to each region. For example, the interface module 901 may be configured to perform S701.

The interface module 901 is further configured to receive a first random access resource from a terminal. The first random access resource is a random access resource corresponding to a region in which the terminal is located. For example, the interface module 901 may be further configured to perform S702.

The interface module 901 is further configured to communicate with the terminal by using a first communication resource. The first communication resource is a communication resource corresponding to the region corresponding to the first random access resource. For example, the interface module 901 may be further configured to perform S703.

In a possible implementation, the interface module 901 is further configured to: send m first synchronization signal blocks at a first moment respectively by using second communication resources of m regions in the plurality of regions, where the m first synchronization signal blocks include a same cell identifier, m is an integer greater than 1, and m is less than a total quantity of the plurality of regions.

In a possible implementation, the first synchronization signal block further includes an identifier of the first synchronization signal block, a primary synchronization signal, a secondary synchronization signal, and a physical broadcast channel, and the m first synchronization signal blocks include same content.

In a possible implementation, the interface module 901 is further configured to: send m second synchronization signal blocks at a second moment respectively by using third communication resources of the m regions, where the m second synchronization signal blocks include a same cell identifier, and the second synchronization signal block and the first synchronization signal block include a same cell identifier.

In a possible implementation, the information about the random access resource indicates a preamble corresponding to each region; or the information about the random access resource indicates a random access channel occasion corresponding to each region; or the information about the random access resource indicates a preamble format corresponding to each region.

In a possible implementation, the interface module 901 is further configured to: send inter-region switch information, where the inter-region switch information indicates regions to which the terminal switches in sequence in a first cell and condition information for triggering each inter-region switch.

In a possible implementation, the condition information for triggering the inter-region switch indicates a time of triggering the inter-region switch, or a boundary of a corresponding region.

In a possible implementation, the first communication resource includes at least one of a beam, an antenna port, a transmission reception point, or a transceiver.

In a possible implementation, the information about the random access resource, the position information, and the information about communication resources are included in a system information block message.

When the communication apparatus 90 is configured to implement the function of the network device, for other functions that can be implemented by the communication apparatus 90, refer to related descriptions of the embodiment shown in FIG. 7 or the embodiment shown in FIG. 8. Details are not described again.

Alternatively, for example, the communication apparatus 90 is configured to implement a function of a terminal. The communication apparatus 90 is, for example, the terminal described in the embodiment shown in FIG. 7 or the embodiment shown in FIG. 8.

The processing module 902 is configured to obtain information about a random access resource, position information of a plurality of regions, and information about a communication resource corresponding to each region. The information about the random access resource indicates a random access resource corresponding to each region. For example, the processing module 902 may be configured to perform S701.

The interface module 901 is configured to send a first random access resource to the network device. The first random access resource is a random access resource corresponding to a region in which a terminal is located, and the region in which the terminal is located is determined based on a location of the terminal and the position information. For example, the interface module 901 may be configured to perform S702.

The interface module 901 is further configured to communicate with the network device by using a first communication resource. The first communication resource is a communication resource corresponding to the region in which the terminal is located. For example, the interface module 901 may be further configured to perform S703.

In a possible implementation, the information about the random access resource indicates a preamble corresponding to each region; or the information about the random access resource indicates a random access channel occasion corresponding to each region; or the information about the random access resource indicates a preamble format corresponding to each region.

In a possible implementation, the interface module 901 is further configured to: receive inter-region switch information, where the inter-region switch information indicates regions to which the terminal switches in sequence in a first cell and condition information for triggering each inter-region switch.

In a possible implementation, the condition information for triggering the inter-region switch indicates a time of triggering the inter-region switch, or a boundary of a corresponding region.

In a possible implementation, the processing module 902 is specifically configured to: receive a system information block message from the network device by using the interface module 901, where the system information block message includes the information about the random access resource, the position information, and the information about communication resources.

In a possible implementation, the first communication resource includes at least one of a beam, an antenna port, a transmission reception point, or a transceiver.

When the communication apparatus 90 is configured to implement the function of the terminal, for other functions that can be implemented by the communication apparatus 90, refer to related descriptions of the embodiment shown in FIG. 7 or the embodiment shown in FIG. 8. Details are not described again.

Alternatively, for example, the communication apparatus 90 is configured to implement a function of a network device. The communication apparatus 90 is, for example, the network device described in the embodiment shown in FIG. 4, the embodiment shown in FIG. 5, or the embodiment shown in FIG. 6.

The interface module 901 is configured to send n first synchronization signal blocks at a first moment respectively by using first communication resources of n regions in p regions. The n first synchronization signal blocks include a same cell identifier, n is an integer greater than 1, and n is less than p. For example, the interface module 901 may be configured to perform S401.

In a possible implementation, the first synchronization signal block further includes an identifier of the first synchronization signal block, a primary synchronization signal, a secondary synchronization signal, and a physical broadcast channel, and the n first synchronization signal blocks include same content.

In a possible implementation, the interface module 901 is further configured to send n second synchronization signal blocks at a second moment respectively by using second communication resources of the n regions, where the n second synchronization signal blocks include a same cell identifier, and the second synchronization signal block and the first synchronization signal block include a same cell identifier.

In a possible implementation, the interface module 901 is configured to send r third synchronization signal blocks at a third moment respectively by using third communication resources of r regions in the p regions. The r third synchronization signal blocks include a same cell identifier, the cell identifier included in the third synchronization signal block is different from the cell identifier included in the first synchronization signal block, the r regions are regions other than the n regions in the p regions, r is an integer greater than 1, and r is less than p.

In a possible implementation, the first communication resource includes at least one of a beam, an antenna port, a transmission reception point, or a transceiver.

When the communication apparatus 90 is configured to implement the function of the RAN node, for other functions that can be implemented by the communication apparatus 90, refer to related descriptions of the embodiment shown in FIG. 4, the embodiment shown in FIG. 5, or the embodiment shown in FIG. 6. Details are not described again.

In a simple embodiment, a person skilled in the art may figure out that the communication apparatus 90 may be in a form shown in FIG. 3. For example, the processor 301 in FIG. 3 may invoke the computer-executable instructions stored in the memory 303, so that the communication apparatus 90 performs the method in the foregoing embodiment.

For example, functions/implementation processes of the interface module 901 and the processing module 902 in FIG. 9 may be implemented by the processor 301 in FIG. 3 by invoking the computer-executable instructions stored in the memory 303. Alternatively, the function/implementation process of the processing module 902 in FIG. 9 may be implemented by the processor 301 in FIG. 3 by invoking the computer-executable instructions stored in the memory 303, and the function/implementation process of the interface module 901 in FIG. 9 may be implemented by the communication interface 304 in FIG. 3.

It may be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built in an SoC (system-on-chip) or an ASIC, or may be an independent semiconductor chip. The processor may further include a necessary hardware accelerator, such as a field programmable gate array (field programmable gate array, FPGA), a PLD (programmable logic device), or a logic circuit that implements special logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, this application further provides a system-on-chip, including at least one processor and an interface. The at least one processor is coupled to a memory by using the interface. When the at least one processor executes a computer program or computer instructions in the memory, the method in any one of the foregoing method embodiments is performed. In a possible implementation, the chip system further includes a memory. Optionally, the system-on-chip may include a chip, or may include a chip and another discrete component. This is not specifically limited in this application.

Optionally, this application further provides a computer-readable storage medium. All or some of procedures in the foregoing method embodiments may be implemented by related hardware instructed by a computer program. The program may be stored in the foregoing computer-readable storage medium. When the program is executed, the procedures in the foregoing method embodiments may be performed. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, this application further provides computer instructions. All or some of the procedures in the foregoing method embodiments may be completed by computer instructions instructing relevant hardware (for example, a computer, a processor, a terminal, or a network device). The program may be stored in the computer-readable storage medium or the computer program product.

Optionally, this application further provides a communication system, including the network device and the terminal in the foregoing embodiments.

Based on the foregoing descriptions of implementations, a person skilled in the art may clearly understand that, for the purpose of convenient and brief description, division of the foregoing functional modules is used as an example for illustration. In actual application, the foregoing functions can be allocated to different functional modules and implemented based on a requirement, that is, an internal structure of an apparatus is partitioned as different functional modules to implement all or some of the functions described above.

In the several embodiments provided in this application, it should be understood that the disclosed apparatus and method may be implemented in other manners. For example, the described apparatus embodiments are merely examples. For example, the division of modules or units is merely logical function division and may be other division in actual implementation. For example, a plurality of units or components may be combined or integrated into another apparatus, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one physical unit or a plurality of physical units, that is, the parts may be located in one position or distributed in a plurality of different positions. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:

   sending information about a random access resource, position information of a plurality of regions, and information about a communication resource corresponding to each region, wherein the information about the random access resource indicates a random access resource corresponding to each region;
   receiving a first random access resource from a terminal, wherein the first random access resource is a random access resource corresponding to a region in which the terminal is located; and
   communicating with the terminal by using a first communication resource, wherein the first communication resource is a communication resource corresponding to the region corresponding to the first random access resource.

2. The method according to claim 1, wherein the method further comprises:
   sending m first synchronization signal blocks at a first moment respectively by using second communication resources of m regions in the plurality of regions, wherein the m first synchronization signal blocks comprise a same cell identifier, m is an integer greater than 1, and m is less than a total quantity of the plurality of regions.

3. The method according to claim 2, wherein the first synchronization signal block further comprises an identifier of the first synchronization signal block, a primary synchronization signal, a secondary synchronization signal, and a physical broadcast channel, and the m first synchronization signal blocks comprise same content.

4. The method according to claim 2 or 3, wherein the method further comprises:
   sending m second synchronization signal blocks at a second moment respectively by using third communication resources of the m regions, wherein the m second synchronization signal blocks comprise a same cell identifier, and the second synchronization signal block and the first synchronization signal block comprise a same cell identifier.

5. The method according to any one of claims 1 to 4, wherein

   the information about the random access resource indicates a preamble corresponding to each region; or
   the information about the random access resource indicates a random access channel occasion corresponding to each region; or
   the information about the random access resource indicates a preamble format corresponding to each region.

6. The method according to any one of claims 1 to 5, wherein the method further comprises:
   sending inter-region switch information, wherein the inter-region switch information indicates regions to which the terminal switches in sequence in a first cell and condition information for triggering each inter-region switch.

7. The method according to claim 6, wherein the condition information for triggering the inter-region switch indicates a time of triggering the inter-region switch, or a boundary of a corresponding region.

8. The method according to any one of claims 1 to 7, wherein the first communication resource comprises at least one of a beam, an antenna port, a transmission reception point, or a transceiver.

9. The method according to any one of claims 1 to 8, wherein the information about the random access resource, the position information, and the information about communication resources are comprised in a system information block message.

10. A communication method, wherein the method comprises:

obtaining information about a random access resource, position information of a plurality of regions, and information about a communication resource corresponding to each region, wherein the information about the random access resource indicates a random access resource corresponding to each region;

sending a first random access resource to a network device, wherein the first random access resource is a random access resource corresponding to a region in which a terminal is located, and the region in which the terminal is located is determined based on a location of the terminal and the position information; and

communicating with the network device by using a first communication resource, wherein the first communication resource is a communication resource corresponding to the region in which the terminal is located.

11. The method according to claim 10, wherein

the information about the random access resource indicates a preamble corresponding to each region; or

the information about the random access resource indicates a random access channel occasion corresponding to each region; or

the information about the random access resource indicates a preamble format corresponding to each region.

12. The method according to claim 10 or 11, wherein the method further comprises:

receiving inter-region switch information, wherein the inter-region switch information indicates regions to which the terminal switches in sequence in a first cell and condition information for triggering each inter-region switch.

13. The method according to claim 12, wherein the condition information for triggering the inter-region switch indicates a time of triggering the inter-region switch, or a boundary of a corresponding region.

14. The method according to any one of claims 10 to 13, wherein obtaining the information about the random access resource, the position information of the plurality of regions, and the information about the communication resource corresponding to each region comprises:

receiving a system information block message from the network device, wherein the system information block message comprises the information about the random access resource, the position information, and the information about communication resources.

15. The method according to any one of claims 10 to 14, wherein the first communication resource comprises at least one of a beam, an antenna port, a transmission reception point, or a transceiver.

16. A communication method, wherein the method comprises:

sending n first synchronization signal blocks at a first moment respectively by using first communication resources of n regions in p regions, wherein the n first synchronization signal blocks comprise a same cell identifier, n is an integer greater than 1, and n is less than p.

17. The method according to claim 16, wherein the first synchronization signal block further comprises an identifier of the first synchronization signal block, a primary synchronization signal, a secondary synchronization signal, and a physical broadcast channel, and the n first synchronization signal blocks comprise same content.

18. The method according to claim 16 or 17, wherein the method further comprises:

sending n second synchronization signal blocks at a second moment respectively by using second communication resources of the n regions, wherein the n second synchronization signal blocks comprise a same cell identifier, and the second synchronization signal block and the first synchronization signal block comprise a same cell identifier.

19. The method according to any one of claims 16 to 18, wherein the method further comprises:

sending r third synchronization signal blocks at a third moment respectively by using third communication resources of r regions in the p regions, wherein the r third synchronization signal blocks comprise a same cell identifier, the cell identifier comprised in the third synchronization signal block is different from the cell identifier comprised in the first synchronization signal block, the r regions are regions other than the n regions in the p regions, r is an integer greater than 1, and r is less than p.

20. The method according to any one of claims 16 to 19, wherein the first communication resource comprises at least one of a beam, an antenna port, a transmission reception point, or a transceiver.

21. A communication apparatus, comprising a unit or a module configured to perform the method according to any one of claims 1 to 9, comprising a unit or a module configured to perform the method according to any one of claims 10 to 15, or comprising a unit or a module configured to perform the method according to any one of claims 16 to 20.

22. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9, or perform the method according to any one of claims 10 to 15, or perform the method according to any one of claims 16 to 20.

23. A chip, comprising a processor, wherein the processor is coupled to a memory, the memory is configured to store a program or instructions, and when the program or the instructions are executed by the processor, the chip is enabled to perform the method according to any one of claims 1 to 9, or the method according to any one of claims 10 to 15, or the method according to any one of claims 16 to 20.

24. A computer-readable storage medium, wherein the computer-readable storage medium stores a computer program or instructions, and when the computer program or the instructions are executed, a computer is enabled to perform the method according to any one of claims 1 to 9, or the method according to any one of claims 10 to 15, or the method according to any one of claims 16 to 20.

25. A computer program product, wherein the computer program product comprises computer program code, and when the computer program code is run on a computer, the computer is enabled to implement the method according to any one of claims 1 to 9, or implement the method according to any one of claims 10 to 15, or implement the method according to any one of claims 16 to 20.

26. A communication system, comprising an apparatus configured to perform the method according to any one of claims 1 to 9 and an apparatus configured to perform the method according to any one of claims 10 to 15.

FIG. 1A

FIG. 1B

FIG. 1C

FIG. 1D

Moment t0

Beam 1

Beam 2

Beam 8

Cell 2

Cell 8

Coverage
area of a
network
device

Beam
position

Cell 1

FIG. 1E

Moment t1

... 

Beam 8

Beam 1

Beam 2

Cell 10

Coverage
area of a
network
device

Cell 16

Beam
position
Cell 9

FIG. 1F

Network
device 101

Network
device 102

Cell 1 (PCI is 1)

Cell 2 (PCI is 1)

FIG. 1G

FIG. 1H

FIG. 1I

The source TRP and the destination
TRP belong to a same cell

| Terminal | | Source TRP | | Destination TRP |

MAC-CE

TRS

FIG. 1J

TRP 1

TRP 2

TRP 3

FIG. 1K

FIG. 2A

FIG. 2B

FIG. 2C

FIG. 2D

FIG. 3

S401: Send n first SSBs at a first moment respectively by using first communication resources of n regions in p regions

Beam 2 (for sending a first SSB)

Beam 1 (for sending a first SSB)

...

Beam n (for sending a first SSB)

Coverage area of a network device

Beam position

Belonging to a same cell

One of p regions

One of n regions

FIG. 4

S401: Send n first SSBs at a first moment respectively by using first communication resources of n regions in p regions

S402: Send n second SSBs at a second moment respectively by using second communication resources of the n regions

Beam 2' (for sending a second SSB)

Beam 1' (for sending a second SSB)

Beam n' (for sending a second SSB)

...

Beam position

Coverage region of a network device

Belonging to a same cell

One of p regions

One of n regions

FIG. 5

S401: Send n first SSBs at a first moment respectively by using first communication resources of n regions in p regions

S402: Send n second SSBs at a second moment respectively by using second communication resources of the n regions

S403: Send r third SSBs at a third moment respectively by using third communication resources of r regions in the p regions

Beam 2" (for sending a third SSB)

Beam 1" (for sending a third SSB)

Beam r" (for sending a third SSB)

...

Coverage region of a network device

Beam position

Belonging to a same cell

One of p regions

One of n regions

One of r regions

FIG. 6

| Network device | | Terminal |
|---|---|---|

S701: Information about a random access resource, position information of a plurality of regions, and information about a communication resource corresponding to each region

S702: First random access resource

S703: Perform communication by using a first communication resource corresponding to the first random access resource

FIG. 7

| Network device | | Terminal |
|---|---|---|

S700A: Send m first SSBs at a first moment respectively by using second communication resources of m regions in a plurality of regions

S700B: Send m second SSBs at a second moment respectively by using third communication resources of the m regions

S700C: Send s third SSBs at a third moment respectively by using fourth communication resources of s regions in the plurality of regions

S701: Information about a random access resource, position information of the plurality of regions, and information about a communication resource corresponding to each region

S702: First random access resource

S703: Perform communication by using a first communication resource corresponding to the first random access resource

S704: Inter-region switch information

FIG. 8

Communication apparatus 90

Interface module —— 901

Processing module —— 902

FIG. 9

## INTERNATIONAL SEARCH REPORT

| International application No. |
| --- |
| **PCT/CN2024/121109** |

| A. | CLASSIFICATION OF SUBJECT MATTER |
| --- | --- |

H04W72/23(2023.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXTC; CNKI: 随机接入, 资源, 前导码, 位置, 区域, 小区, 定位, 波束, 天线, 端口, 映射, 对应, 同步信号块, 合并, 相同, 标识, random access, RACH, resource, RO, preamble, zone, cell, position, location, beam, antenna, port, map, SSB, merge, combine, same, PCI, ID, identification

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116133146 A (HUAWEI TECHNOLOGIES CO., LTD.) 16 May 2023 (2023-05-16) description, paragraphs [0229]-[0483], and figures 1a-17 | 1-15, 21-26 |
| A | CN 111972015 A (BEIJING XIAOMI MOBILE SOFTWARE CO., LTD.) 20 November 2020 (2020-11-20) entire document | 1-26 |
| A | CN 116209063 A (HUAWEI TECHNOLOGIES CO., LTD.) 02 June 2023 (2023-06-02) entire document | 1-26 |
| A | CN 116419146 A (SPREADTRUM SEMICONDUCTOR (NANJING) CO., LTD.) 11 July 2023 (2023-07-11) entire document | 1-26 |
| A | WO 2023030654 A1 (NOKIA TECHNOLOGIES OY) 09 March 2023 (2023-03-09) entire document | 1-26 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 November 2024** | **05 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/121109** |

| Patent document cited in search report | | | Publication date (day/month/year) | Patent family member(s) | Publication date (day/month/year) |
| --- | --- | --- | --- | --- | --- |
| CN | 116133146 | A | 16 May 2023 | None | |
| CN | 111972015 | A | 20 November 2020 | None | |
| CN | 116209063 | A | 02 June 2023 | None | |
| CN | 116419146 | A | 11 July 2023 | None | |
| WO | 2023030654 | A1 | 09 March 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311295572